(19) **Europäisches Patentamt European Patent Office Office européen des brevets**

(11) **EP 4 318 362 B1**

(12) **EUROPEAN PATENT SPECIFICATION**

(45) Date of publication and mention of the grant of the patent:
**23.07.2025 Bulletin 2025/30**

(21) Application number: **22857546.0**

(22) Date of filing: **28.07.2022**

(51) International Patent Classification (IPC):
*H04L 9/00* (2022.01)          *H04L 9/40* (2022.01)

(52) Cooperative Patent Classification (CPC):
**H04L 9/50; H04L 63/12**

(86) International application number:
**PCT/CN2022/108482**

(87) International publication number:
**WO 2023/020233 (23.02.2023 Gazette 2023/08)**

(54) **BLOCKCHAIN-BASED DATA PROCESSING METHOD, APPARATUS AND DEVICE, AND STORAGE MEDIUM**

VERFAHREN, VORRICHTUNG UND VORRICHTUNG ZUR BLOCKCHAIN-BASIERTEN DATENVERARBEITUNG SOWIE SPEICHERMEDIUM

PROCÉDÉ, APPAREIL ET DISPOSITIF DE TRAITEMENT DE DONNÉES REPOSANT SUR UNE CHAÎNE DE BLOCS, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2021 CN 202110948504**

(43) Date of publication of application:
**07.02.2024 Bulletin 2024/06**

(73) Proprietor: **Tencent Technology (Shenzhen) Company Limited**
**Shenzhen, Guangdong, 518057 (CN)**

(72) Inventor: **ZHU, Gengliang**
**Shenzhen, Guangdong 518057 (CN)**

(74) Representative: **Novagraaf International SA**
**Chemin de l'Echo 3**
**1213 Onex, Geneva (CH)**

(56) References cited:
**WO-A1-2020/189800          CN-A- 112 948 153**
**CN-A- 113 098 694          CN-A- 113 256 424**
**CN-A- 113 395 363          US-A1- 2019 340 266**
**US-A1- 2020 034 395**

- SU ZHOU ET AL: "LVBS: Lightweight Vehicular Blockchain for Secure Data Sharing in Disaster Rescue", IEEE TRANSACTIONS ON DEPENDABLE AND SECURE COMPUTING, IEEE SERVICE CENTER, NEW YORK, NY, US, vol. 19, no. 1, 13 March 2020 (2020-03-13), pages 19 - 32, XP011897695, ISSN: 1545-5971, [retrieved on 20220114], DOI: 10.1109/TDSC.2020.2980255
- EL MAGHRAOUI KAOUTAR ET AL: "Inter Blockchain Communication : A Survey", PROCEEDINGS OF THE ARABWIC 6TH ANNUAL INTERNATIONAL CONFERENCE RESEARCH TRACK, 7 March 2019 (2019-03-07), pages 1 - 6, XP093200806, Retrieved from the Internet <URL:https://dl.acm.org/doi/pdf/10.1145/3333165.3333167>

**Description**

This application claims priority to Chinese Patent Application No. 2021109485046, filed with the China National Intellectual Property Administration on August 18, 2021 and entitled "METHOD AND APPARATUS FOR PROCESSING DATA BASED ON BLOCKCHAIN, DEVICE, AND STORAGE MEDIUM"

FIELD OF THE TECHNOLOGY

The present disclosure relates to the field of computer technology, and specifically relates to a method, an apparatus, and a device for processing data based on a blockchain, a computer-readable storage medium, and a computer program product of blockchain-based data.

BACKGROUND OF THE DISCLOSURE

Continuous development of computer technology engenders wide application of blockchains in asset transfer, service data storage, and other fields due to their traceability. The service data storage is taken as an example, where service data are uploaded onto a blockchain after being generated by a blockchain node, so as to ensure the traceability of the service data (that is, the service data is tamperproof after being uploaded). In practice, uploading the service data onto the blockchain generally includes packing all service data, which is required to be uploaded within a period, into a block. In practice, an inter-chain service may relate to multiple pieces of service data, and hence the inter-chain service is processed with low efficiency.

United States patent application publication document US 2020/034395 A1 discloses an alternative method of obtaining consensus to efficiently store service data, explicitly also including inter-chain service data, on a blockchain.

SUMMARY

A method, an apparatus, and a device for processing data based on a blockchain, a storage medium, and a computer program product are provided according to embodiments of the present disclosure.

In an aspect, a method for processing data based on a blockchain is provided according to an embodiment of the present disclosure. The blockchain comprises at least one block and is deployed in a blockchain network comprising a witness subnet and a consensus subnet, the witness subnet comprises at least one service node, and the consensus subnet comprises at least two consensus clusters. Each of the at least two consensus cluster comprises multiple accounting nodes, one of which is elected as a representative node of such consensus cluster. The representative nodes of all consensus clusters form a consensus committee of the blockchain. The method is executable by a computer device at a first representative node among the representative nodes, and comprises: obtaining upload information of the blockchain, where the upload information indicates a block type to which a next block to be uploaded onto the blockchain is required to belong; obtaining a target block to be verified through a consensus mechanism in the blockchain network, where the target block is generated from data of an inter-chain service; and determining the target block to serve as the next block to be uploaded onto the blockchain and adding the target block into the blockchain, in response to the upload information indicating that the block type is a co-exclusive type, where each block of the co-exclusive type stores data of a respective independent inter-chain service.

In another aspect, an apparatus for processing data based on a blockchain is provided according to an embodiment of the present disclosure. The blockchain comprises at least one block and is deployed in a blockchain network comprising a witness subnet and a consensus subnet, the witness subnet comprises at least one service node, and the consensus subnet comprises at least two consensus clusters. Each of the at least two consensus cluster comprises multiple accounting nodes, one of which is elected as a representative node of such consensus cluster. The representative nodes of all consensus clusters form a consensus committee of the blockchain. The apparatus is deployed at a first representative node among the representative nodes, and comprises: an obtaining unit, configured to obtain upload information of the blockchain, where the upload information indicates a block type to which a next block to be uploaded onto the blockchain is required to belong, and obtain a target block to be verified through a consensus mechanism in the blockchain network, where the target block is generated from data of an inter-chain service; and a processing unit, configured to determine the target block to serve as the next block to be uploaded onto the blockchain and add the target block into the blockchain, in response to the upload information indicating that the block type is a co-exclusive type, where each block of the co-exclusive type stores data of a respective independent inter-chain service.

Correspondingly, a device for processing data based on a blockchain is provided according to an embodiment of the present disclosure. The device comprises: one or more processors, configured to load and execute computer-readable instructions; and a computer-readable storage medium storing the computer readable instructions; wherein the computer readable instructions when executed by the one or more processors implement the foregoing method.

Correspondingly, a non-volatile computer-readable storage medium storing computer-readable instructions is provided according to an embodiment of the present disclosure. The computer-readable instructions are configured to be loaded and executed by a processor to implement the foregoing method.

Correspondingly, a computer program product comprising computer-readable instructions is provided according to an embodiment of the present disclosure. The computer-readable instructions are stored in a computer-readable storage medium. A processor of a computer device reads the computer-readable instructions from the computer-readable storage medium, and executes the computer-readable instructions to enable the computer device to perform the foregoing method.

Details of one or more embodiments of the present disclosure are provided in following drawings and description. Other features, objectives, and advantages of the present disclosure would become apparent from the description, drawings and claims.

BRIEF DESCRIPTION OF THE DRAWINGS

In order to clarity illustration of the technical solutions according to embodiments of the present disclosure or conventional technology, hereinafter the drawings to be applied in embodiments of the present disclosure or technology are briefly described. Apparently, the drawings in the following descriptions are only some embodiments of the present disclosure, and other drawings may be obtained by those skilled in the art based on the provided drawings without creative efforts.

Figure 1a shows a schematic diagram of architecture of a data sharing system according to an embodiment of the present disclosure.

Figure 1b shows a schematic structural diagram of a blockchain according to an embodiment of the present disclosure.

Figure 1c shows a flowchart for generating a block according to an embodiment of the present disclosure.

Figure 1d shows a schematic diagram of architecture of a bi-layer network according to an embodiment of the present disclosure.

Figure 1e shows a schematic diagram of architecture of a bi-layer network according to another embodiment of the present disclosure.

Figure 1f shows a schematic diagram of a scenario of an electronic invoicing service based on a bi-layer network according to an embodiment of the present disclosure.

Figure 2 shows a flowchart of a method for processing data based on a blockchain according to an embodiment of the present disclosure.

Figure 3 shows a flowchart of a method for processing data based on a blockchain according to another embodiment of the present disclosure.

Figure 4 shows a schematic diagram of a scenario of blockchain-based data processing according to an embodiment of the present disclosure.

Figure 5 shows a structure diagram of an apparatus for processing data based on a blockchain according to an embodiment of the present disclosure.

Figure 6 shows a structure diagram of a device for processing data based on a blockchain according to an embodiment of the present disclosure.

DESCRIPTION OF EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Embodiments of the present disclosure relate to blockchain technology. Hereinafter relevant terms and concepts of blockchain technology are briefly introduced. The blockchain is a new mode of applying computer technology, for example, distributed data storage, point-to-point transmission, consensus mechanisms, and encryption algorithms. The blockchain is essentially a decentralized database, and a series of data blocks are generated through a cryptography means. Each data block comprises information of a batch of network transaction(s), and can be used for checking validity of the information (anti-counterfeiting) and generating a next block. The blockchain may comprise an underlying platform, a platform-product service layer, and an application service layer.

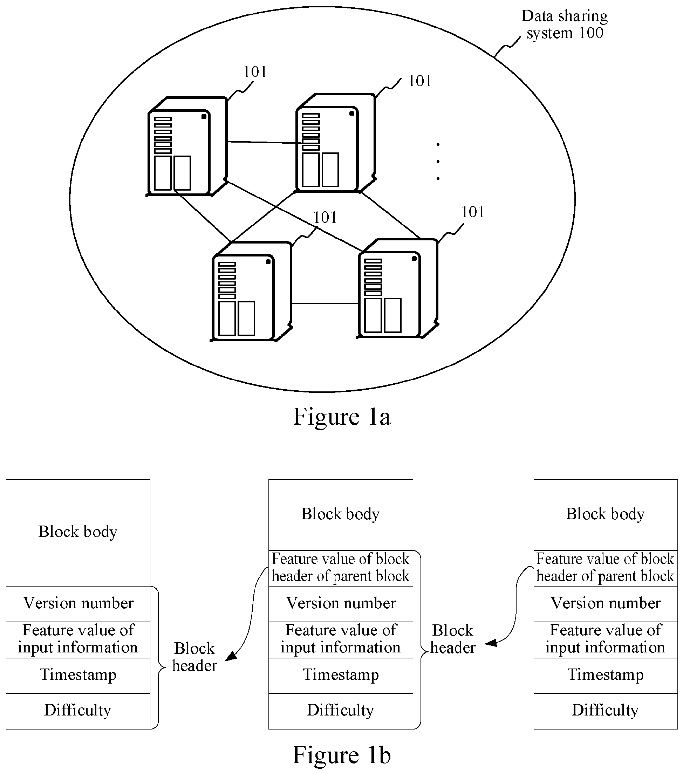

A blockchain network may be regarded as a data sharing system 100. The system 100 may be configured to share data among nodes. An exemplary structure of the data sharing system 100 may refer to Figure 1a. As shown in Figure 1a, the data sharing system 100 refers to a system for sharing data among nodes. The data sharing system may comprise multiple nodes 101, and the multiple nodes 101 may be various clients forming the blockchain network. During normal operation, each node 101 may receive inputted information and maintain shared data in the blockchain network based on the inputted information. In order to ensure information exchange within the blockchain network, information connection may be provided among the nodes in the blockchain network, and the nodes are capable to transmit information via the information connection. For example, in a case that any node in the blockchain network receives inputted information, the other nodes in the blockchain network obtain the inputted information and store the inputted information as shared data according to a consensus algorithm. Thereby, data stored in all nodes is consistent in the blockchain network.

Each node in the data sharing system has a corresponding node identifier, and each node in the blockchain system can store the node identifiers of other nodes in the blockchain system, such that it may broadcast a generated block to other nodes in the blockchain system subsequently according to the node identifiers. Each node may maintain a node identifier list as shown in Table 1, and store the node names and the node identifiers correspondingly in the node identifier list. The node identifier may be an Internet Protocol (IP) address and any other type of information capable of identifying a node. For example, the node identifier may be a binary sequence code (e.g., 110001110). IP addresses are taken as an example for illustration in Table 1.

Table 1

| Node name | Node identifier |
|---|---|
| Node 1 | 117.114.151.174 |
| Node 2 | 117.116.189.145 |
| ... | ... |
| Node X (X being a positive integer) | xx.xxx.xxx.xxx |

Each node in the data sharing system stores the same blockchain. Reference is made to Figure 1b. The blockchain comprises multiple blocks. A genesis block comprises a block header and a block body, the block header stores a feature value of input information, a version number, a timestamp, and a difficulty value, and the block body stores the input information. Similarly, a next block also comprises a block header and a block body, and the block header stores a feature value of input information of the current block, a feature value of the block header of a parent block, a version number, a timestamp, and a difficulty value. The other blocks can be deduced by analogy. Thereby, data stored in each block of the blockchain is associated with the data stored in its parent block, which ensures security of information inputted into the blocks.

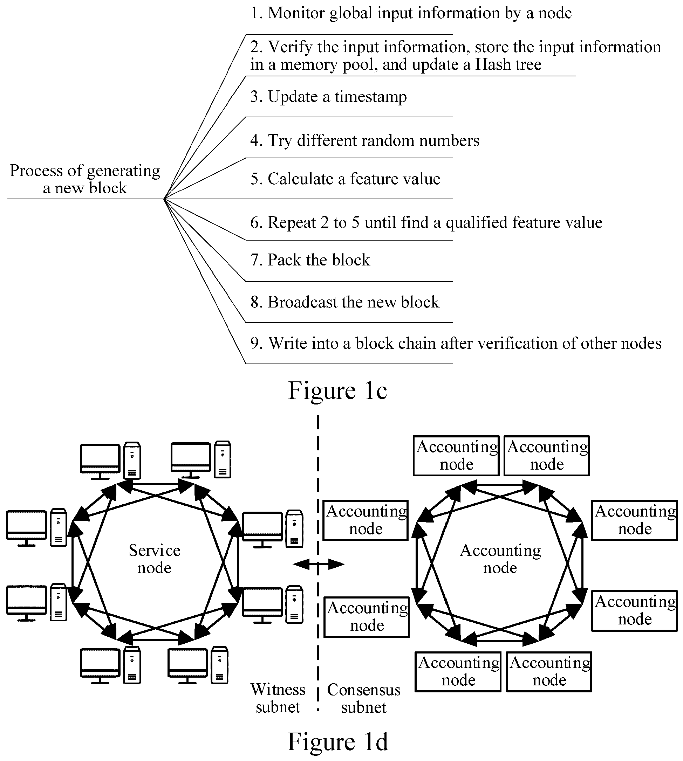

Reference is made to Figure 1c. When generating a block in the blockchain, a node in which the blockchain is located receives and verifies input information, then stores the input information into a memory pool, and update a hash tree which is of the block and is configured to record the input information. Afterwards, the timestamp is updated to be a moment when the input information is received. Different random numbers are tried to calculate different feature values, until the calculated feature value satisfies the following condition:

$$SHA256\left(SHA256(version + prev\_hash + merkle\_root + ntime + nbits + x)\right) < TARGET.$$

*SHA256* is an algorithm used for calculating the feature value, *version* (i.e., a version number) carries version information of a relevant block protocol in the blockchain, *prev_hash* represents a feature value of the block header of the parent block of a current block, merkle_root represents a feature value of input information, *ntime* represents a moment at which the timestamp is updated, *nbits* represents a current difficulty, which is constant within a time period and is refreshed after exceeding the time period, *x* is the random number, *TARGET* represents a threshold of the feature value, and the threshold may be determined according to *nbits.*

Thereby, when the random umber satisfying the above condition is determined through calculation, the information may be correspondingly stored, and a block header and a block body are generated to obtain the current block. Subsequently, the node at which the blockchain is located transmits the newly generated block respectively to other nodes in the blockchain system, in which the node is located, according to node identifiers of these nodes. The other nodes verify the newly generated block, and add the newly generated block into the blockchain stored thereon after the verification is successful. The nodes may verify the newly generated block through a consensus algorithm, which includes but is not limited to following types.

1) Proof of work (Pow)

The Pow refers to a measurement set by a system (e.g., the aforementioned data sharing system) for achieving a certain goal. The Pow may be conceptually simplified as a proof for confirming a workload. In essence, the more workload a party completes, the more likely it is the party gets an extra reward. A common name of the Pow is "mining". That is, a random number meeting a rule is calculated through AND or OR operation(s), thereby a privilege of current accounting is obtained, and data to be recorded for current accounting is transmitted. Other nodes in the blockchain network verify the data and then also store the data. Hence, the Pow is advantageous in complete decentralization and free access of nodes.

2) Proof of stake (Pos)

The Pos is an upgraded consensus mechanism based on the Pow. Specifically, the larger a temporal length of a party holding electronic resources is (the temporal length of holding the electronic resources is equal to an amount of the held electronic resources multiplied by duration of holding the electronic resources), the more likely it is the party gets a privilege of accounting a block. The electronic resources may refer to resources which are stored in an electronic account in an electronic form and are transferable via the Internet. A difficulty of mining is reduced proportionally according to a proportion of resources and duration of holding the electronic resources at each node. Hence, random numbers can be obtained more quickly. The Pos shortens time for reaching a consensus to some extent, and the mining is still necessary.

3) Delegated proof of stake (DPos), share authorization proof mechanism

The DPos is similar to voting in the board of directors. Holders of electronic resources vote nodes of a certain quantity for verification and accounting on their behalf. The system would generate a small amount of electronic resources as a reward, so as to ensure an incentive for more people to participate in the election. The DPos is as follows. All shareholders vote 101 representatives, which be considered as 101 super nodes or a mining pool, and the 101 super nodes have identical privileges. The DPos mechanism is somewhat like a parliamentary system or a people's congress system. In a case that an elected representative cannot fulfil its duty (fail to generate a block in its tun), the representative is removed from the board, and the network votes a new super node for replacement. Thereby, a quantity of the nodes participating in verification and accounting is greatly reduced in the DPos mechanism, and the consensus can be reached within a level of several seconds. It is noted that the entire consensus still depends on electronic resources.

4) Practical Byzantine Fault Tolerance (pbft)

The Pbft is a consistency algorithm based on message passing. The algorithm achieves consistency through three stages which may be repeated in case of failure. Specifically, it is assumed that a total quantity of nodes is 3f+1, and f is a quantity of Byzantine fault nodes. First, when discovering that a leader (e.g., the representative node, the accounting node, or the super node) misbehaves, a node votes another replica (another node) as the leader through an algorithm. Second, the leader broadcasts it's selected value to other replica nodes through a pre-prepare message. Another replica node transmits a prepare message when accepting the value, and does not transmit the prepare message when not accepting the value. Third, a node transmits a commit message on knowing that 2f nodes have transmitted the prepare message. Finally, the value is verified in a case that 2f+1 nodes have transmitted the commit message. The above process enables the pbft to reach a consensus among the nodes which comprise a service party or a supervising party related to a service, and security and stability are guaranteed by the service-related parties. Moreover, a time delay of the consensus is about 2 to 5 seconds, which basically meets a requirement of commercial real-time processing. Efficiency of the consensus is improved, and a requirement on high-frequency transactions can be met.

5) Paxos (a distributed algorithm)

The Paxos is a two-stage algorithm, and mainly concerns roles of three types: proposers, acceptors, and learners. The proposer provides a proposal, the acceptor approves or rejects the proposal, and the learner obtains a final value after reaching a consensus. The Paxos has two stages. One is the prepare stage. The proposer selects a proposal of which a sequential number is n and transmits a prepare request to a majority among the acceptors. After receiving the prepare request, the acceptor replies by returning a proposal, which it accepts last time, to the proposer and promises that it would not reply any proposal having a sequential number less than n, in response to the sequential number of the proposal is greater than those in all prepare requests which it has replied. Another is the approval stage. The approval stage starts in a case that the proposer receives the replies from more than half of the acceptors for the prepare request. The proposer transmits an accept request to all acceptors that replies the prepare request, and the accept request carries the sequential number n and a value (which may be freely determined by the proposer when there is no value for accepting of the acceptors). The acceptors accept the accept request when they receive the accept request, as long as it does not violate their previous promises.

The Paxos is suitable for a simple fault-tolerant model, that is, there are only invalid or failure nodes and there is no malicious node in the system. When a quantity of failure nodes is x (a positive integer), the system can keep operating normally as long as a quantity of non-failure nodes is x+1.

6) Raft (a distributed consensus algorithm):

The Raft has roles of three types: followers, candidates, and leaders. A node can only be in one of the three statuses at a certain moment, and may switch among the three roles according to time and conditions. An initial status is the follower for all nodes. A follower turns into a candidate and broadcasts a voting request, when not receiving a heartbeat packet in a time limit. A node that obtains more than half of the votes turns into a leader. In a current round of voting, a node initiates voting earlier gains an upper hand, and each node has only one vote. The leader transmits heartbeat packets periodically send to other nodes, and a failure to do so would trigger a new round of voting.

In practice, blockchains may be applied to some scenarios, e.g., a bill service, or data storage of a commercial institution. In such scenarios, not all nodes in the blockchain network have adequate resources and necessities to serve as a node participating in the blockchain consensus. Common peer data deployment for blockchains is not applicable when a blockchain system involves data requiring high security. A bi-layer chain is provided herein to adapt to service requirements (e.g., intranet/internet, service network, and office network separation) and improve data security and data confidentiality. Bi-layer network architecture of "witness subnet - consensus subnet" is established through a peer to peer (P2P) network. Each node in the P2P network is called a peer node. On a basis of a specific network protocol, the P2P network does not require a central node among the peer nodes to maintain a network status. Each node maintains the node status of the whole network and its connection status with neighboring nodes through broadcast interaction with the neighboring nodes.

Figure 1d shows a schematic diagram of architecture of a bi-layer network according to an embodiment of the present disclosure. As shown in Figure 1d, the blockchain network includes a witness subnet and a consensus subnet. Service nodes are deployed in the witness subnet, which is located in a public network. Accounting nodes running a protocol of blockchain consensus are deployed in the consensus subnet. The witness subnet and the consensus subnet interact via a routing boundary denoted by a dashed line. The service nodes in the witness subnet are mainly configured to execute a service, and do not participate in accounting and consensus. The service nodes obtain data of a block header and accessible authorized block data from the consensus subnet through identity authentication. The consensus subnet is a core in the blockchain network, and is configured to perform accounting and consensus for the blockchain network. Generally, the witness subnet and the consensus subnet are in different network environments. The witness subnet is in the public network, and the consensus subnet is in a private network. Since the consensus subnet is in the private network which is relatively secure, its intra-access is secured by a consensus mechanism, and additional identity management and network control are not necessary. In comparison, the service nodes are in the public network and may be accessed by another network terminal which is uncertain. Therefore, accessing of the service nodes and other possible nodes into the consensus subnet should be strictly controlled.

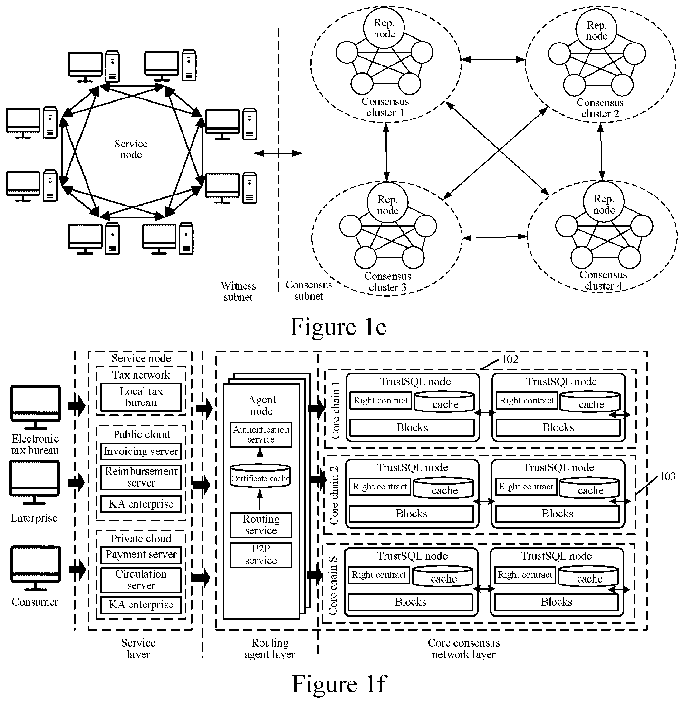

In embodiments of the present disclosure (including both the specification and claims), the accounting nodes in the consensus subnet may be further divided into multiple consensus clusters, that is, multiple consensus clusters may be deployed in the consensus subnet. Each consensus cluster may comprise at least one accounting node. The consensus clusters may be determined according to different rules. For example, the accounting nodes are grouped based on service types, e.g., accounting nodes that process data of services of a same type are grouped into the same consensus cluster. For example, the accounting nodes are grouped based on distances among the accounting nodes, e.g., two or more accounting nodes among which each distance is less than a threshold are grouped into the same consensus cluster. Herein the architecture of the bi-layer blockchain network may be altered into what is shown in Figure 1e. As shown in Figure 1e, the blockchain network comprises the witness subnet and the consensus subnet. Multiple consensus clusters are deployed in the consensus subnetwork, and each consensus cluster comprises at least one accounting node. Any service node in the witness subnet may establish an information connection with the accounting node(s) deployed in a consensus cluster of the consensus subnet. It is assumed that the consensus clusters as shown in Figure 1e are determined according to the service types. In such case, each consensus cluster may be used for providing a consensus service for data of service(s) of one or more types. For example, in Figure 1e, consensus cluster 1 may provide a consensus service for data of invoice service(s), that is, the accounting nodes in consensus cluster 1 perform consensus processing only on invoice data. Consensus cluster 2 may provide a consensus service for data of credit investigation service(s), that is, the accounting nodes in consensus cluster 2 perform consensus processing only on service data related to credit investigation.

In the architecture as shown in Figure 1e, all consensus clusters maintain a blockchain jointly in the blockchain network, and the blockchain is called a main chain and comprises information of all services in the blockchain network. Each consensus cluster may further organize a sub-blockchain for its own service, and the sub-blockchain of each consensus cluster only comprises information of the respective service of such consensus cluster. An accounting node may be elected from each consensus cluster as a representative node of such consensus cluster. The representative node not only participates in consensus processing of the sub-blockchain in the respective consensus cluster, but also participates in consensus processing of the main chain. The non-representative nodes in each consensus cluster, i.e., the accounting nodes in the consensus cluster other than the representative node, only participate in consensus processing of the sub-blockchain within such consensus cluster. In the consensus subnet, the representative nodes elected by all consensus clusters form a consensus committee of the main chain, and perform the consensus processing of the main chain together.

A network providing a consensus service for electronic invoices is taken as an example of the blockchain network. Figure 1f shows architecture of the bi-layer network in a scenario according to an embodiment of the present disclosure. As shown in Figure 1f, the blockchain network comprises a service layer, a routing agent layer and a core consensus network layer. The service layer, the routing agent layer, and the core consensus network layer constitute the entire blockchain service system. First, the service layer is located in the witness subnet and comprises at least one service node which may specifically be an SPV node. The SPV nodes maintain a normal unstructured P2P network. The service nodes may handle taxation (of a local tax bureau), bills (enterprise invoicing), payment (cash flows of an enterprise), and other services. Second, the core consensus network layer is located in the consensus subnet and comprises each consensus cluster, e.g., consensus cluster 102, consensus cluster 103, and the like. Each consensus cluster maintains a sub-blockchain within such cluster, for example, consensus cluster 102 maintains core chain 1 within it, and consensus cluster 103 maintains core chain 2 within it. Third, the routing agent layer comprises at least one agent node which may provide a routing service, an authentication service, a certificate caching service, a peer-to-peer (P2P) service, and the like. The certificate cache service involves a certificate system (PKI, Public Key Infrastructure). In the certificate system, a certificate refers to an identity certificate of an owner of a public key, and is issued by an authority (CA). Asymmetric encryption and digital signature on information may be implemented based on a certificate system of public keys. Information interaction between the service layer and the core consensus network layer is implemented via the routing agent layer. That is, the service layer submits service-operation interactions to the core consensus network layer via the routing agent layer. Thus, the routing agent layer isolates the service layer from the core consensus network layer.

Hereinabove the basic structure of the bi-layer network related to embodiments of the present disclosure is introduced. On such basis, hereinafter a solution for processing data based on a blockchain is briefly described according to embodiments of the present disclosure. The solution is capable to improve efficiency of processing an inter-chain service. The solution may be implemented by a first representative node in the consensus committee shown in Figure 1e. The first representative node may be an arbitrary representative node in the consensus committee. In a specific embodiment, the representative node may be a terminal device or a server. The terminal device may include, but is not limited to, a smart phone (e.g., an Android phone or an IOS phone), a tablet, a portable personal computer, a mobile Internet device (MID), and the like, which is not limited herein. The server may be an independent physical server, may be a server cluster or a distributed system comprising multiple physical servers, or may be a cloud server that provides basic cloud computing services, such as cloud services, cloud databases, cloud computing, cloud functions, cloud storage, network services, cloud communications, middleware services, domain name services, security services, Content Delivery Network (CDN), and big data and artificial intelligence platforms, which is not limited herein.

In embodiments of the present disclosure (including both the specification and claims), the blockchain comprises at least one block, e.g., may comprise M interconnected blocks, where M is a positive integer. The blockchain is located in a blockchain network. As shown in Figure 1e, the blockchain network comprises a witness subnet and a consensus subnet, the witness subnet comprises at least one service node, and the consensus subnet comprises at least two consensus clusters, e.g. N consensus clusters, where N is an integer greater than 1. Each consensus cluster comprises multiple accounting nodes, and one accounting node is elected in each consensus cluster as a representative node of such consensus cluster. Accordingly, the N consensus clusters have N representative nodes. The N representative nodes form a consensus committee of the blockchain. The method for processing data based on the blockchain is executed at a first representative node in the consensus committee. The first representative node may be an arbitrary representative node in the consensus committee. A general principle of the solution is as follows.

(1) The first representative node obtains upload information for the $(M+1)^{th}$ block in the blockchain. The upload information is configured to indicate a block type to which a next block to be uploaded onto the blockchain is required to belong, that is, the block type to which the $(M+1)^{th}$ block is required to belong (e.g., a co-exclusive type, an exclusive type, and an ordinary type). The upload information of the $(M+1)^{th}$ block is generated according to a bidding result for the $(M+1)^{th}$ block. All representative nodes in the blockchain network perform consensus processing on bidding information of the $(M+1)^{th}$ block (e.g., determines a second representative node having a privilege of proposing the $(M+1)^{th}$ block according to the bidding information) so as to obtain the bidding result of the $(M+1)^{th}$ block. The bidding result of the $(M+1)^{th}$ block carries the block type to which the $(M+1)^{th}$ block is required to belong. During an upload (or consensus) process of the $M^{th}$ block, each representative node which requires to bid for the $(M+1)^{th}$ block broadcasts the bidding information to other representative nodes in the blockchain network. The bidding information is for bidding for the privilege of proposing the $(M+1)^{th}$ block. The bidding information carries information concerning service data to be packed in the $(M+1)^{th}$ block (e.g., an amount of service data to be packed in the $(M+1)^{th}$ block, identifier(s) of service parti(es) related to the $(M+1)^{th}$ block, and a type of the service data to be packed in the $(M+1)^{th}$ block). The representative node that obtains the privilege of proposing the $(M+1)^{th}$ block may produce a target block, which is to be verified through a consensus mechanism, according to its bidding information (that is, pack the service data reported in the bidding information to generate the to-be-verified target block).

(2) The first representative node obtains a target block to be verified through a consensus mechanism in the blockchain network. A representative node, which obtains the privilege of proposing the $(M+1)^{th}$ block, broadcasts the target block to each representative node in the blockchain network after packing service data which relates to the $(M+1)^{th}$ block and is to be uploaded on the blockchain (i.e., the service data which the representative node indicates to be packed in the $(M+1)^{th}$ block in its bidding information).

(3) In a case that the upload information indicates that the $(M+1)^{th}$ block is of the co-exclusive type, the target block is subject to a check according to a consensus rule (i.e., a rule for reaching a consensus among the consensus commitee) for the co-exclusive type (i.e., each representative node checks the target block according to the consensus rule separately, and determines a final check result according to a check result of its own and check results broadcasted by other representative nodes checking the target block in the blockchain network). Each block of the co-exclusive block is configured to store data of a respective independent inter-chain service. Each inter-chain service may be the independent inter-chain service, at least two parties participate in the inter-chain service, and each service party provides at least one piece of service data which is to be deposited (i.e., each co-exclusive block stores the service data related to an inter-chain service). The consensus rule is configured for checking whether the target block meets a condition for uploading onto the blockchain (e.g., checking whether pieces of service data in the target block belongs to the same inter-chain service, checking whether service parties of the target block match identifiers of multiple co-exclusive parties of the $(M+1)^{th}$ block which are indicated by the upload information, and the like).

(4) In a case that the target block passes the check, the target block is determined to serve as the $(M+1)^{th}$ block and is added onto the blockchain (i.e., the target block is uploaded onto the blockchain to obtain an updated blockchain).

Herein the upload information for the $(M+1)^{th}$ block of the blockchain and the target block to be verified through the consensus mechanism in the blockchain network are obtained. In a case that the upload information indicates that the type to which the $(M+1)^{th}$ block is required to belong is the co-exclusive type, the target block is subject to the check according to the consensus rule for the co-exclusive type. Each block of the co-exclusive type stores the data of the respective independent inter-chain service. In a case that the target block passes the check, the target block is determined to serve as the $(M+1)^{th}$ block and added onto the blockchain. Hence, when there is inter-chain interaction, the service data of the independent inter-chain services can be stored in blocks of the co-exclusive type. Such solution is advantageous over that verification on an inter-chain service requires checking relevant service data in multiple blocks. Thereby, the inter-chain services can be verified and processed with higher efficiency.

On a basis of the foregoing solution for process data based on the blockchain, a more detailed method for processing data based on a blockchain is provided according to an embodiment of the present disclosure. Hereinafter the method is described in detail in conjunction with the accompanying drawings.

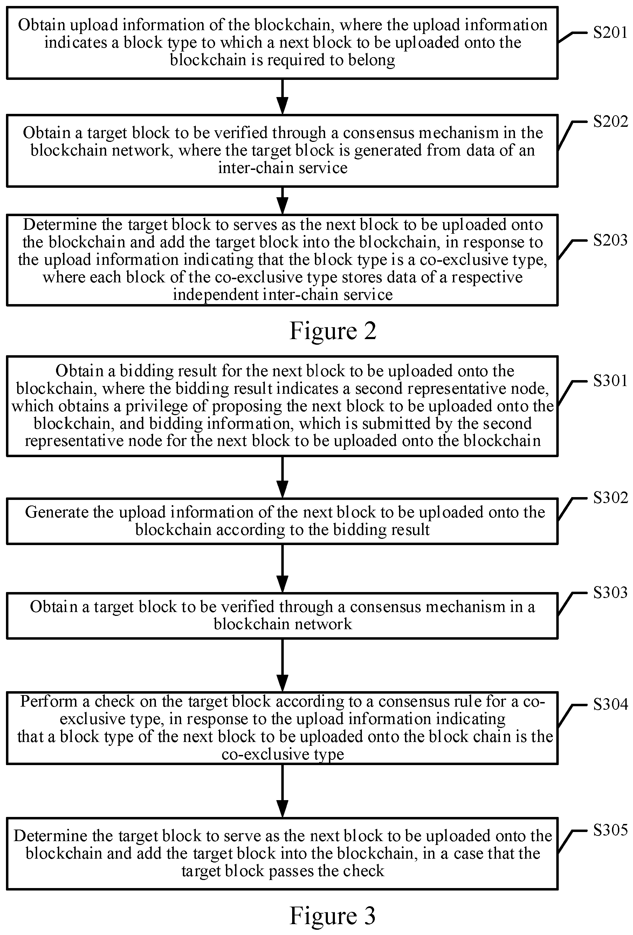

Figure 2 shows a flowchart of a method for processing data based on a blockchain according to an embodiment of the present disclosure. The blockchain comprises block(s) which are interconnected. The blockchain is deployed in a blockchain network. As shown in Figure 1e, the blockchain network comprises a witness subnet and a consensus subnet. The witness subnet comprises at least one service node, and the consensus subnet comprises at least two consensus clusters. Each consensus cluster comprises multiple accounting nodes, one of which is elected as a representative node of such consensus cluster. The representative nodes of all consensus clusters form a consensus committee of the blockchain. The method is executable at a first representative node in the consensus committee. The first representative node may be a representative node in the consensus committee. The method may include, but is not limited to, steps S201 to S203.

In step S201, upload information of the blockchain is obtained, where the upload information indicates a block type to which a next block to be uploaded onto the blockchain is required to belong.

The upload information is configured to indicate information on the next to-be-uploaded block, specifically indicate the type to which the next to-be-uploaded block is required to belong. For example, the type is a co-exclusive type, an exclusive type, or an ordinary type. In a specific application, the blockchain comprises M interconnected blocks, where M is an integer greater than 1. The consensus subnet comprises N consensus clusters, where N is an integer greater than 1. N representative nodes are elected from the N consensus clusters, respectively. That is, there are M blocks currently in the blockchain, the next to-be-uploaded block is the $(M+1)^{th}$ block, and the upload information may indicate the type to which the $(M+1)^{th}$ block is required to belong, e.g., indicate the co-exclusive type, the exclusive type, or the ordinary type. The upload information of the $(M+1)^{th}$ block is generated according to a bidding result for the $(M+1)^{th}$ block. All representative nodes in the blockchain network perform consensus processing on bidding information of the $(M+1)^{th}$ block (e.g., determines a second representative node having a privilege of proposing the $(M+1)^{th}$ block according to the bidding information) so as to obtain the bidding result of the $(M+1)^{th}$ block. The bidding result of the $(M+1)^{th}$ block carries the block type to which the $(M+1)^{th}$ block is required to belong.

During a process for uploading a next block, a representative node requiring to bid for the next block broadcast its bidding information to other representative nodes in the blockchain network. For example, during an upload (or consensus) process of the $M^{th}$ block, each representative node which requires to bid for the $(M+1)^{th}$ block broadcasts the bidding information to other representative nodes in the blockchain network. The bidding information is for bidding for the privilege of proposing the $(M+1)^{th}$ block. The bidding information carries information concerning service data to be packed in the $(M+1)^{th}$ block (e.g., an amount of service data to be packed in the $(M+1)^{th}$ block, identifier(s) of service parti(es) related to the $(M+1)^{th}$ block, and a type of the service data to be packed in the $(M+1)^{th}$ block). The representative node that obtains the privilege of proposing the $(M+1)^{th}$ block may produce a target block, which is to be verified through a consensus mechanism, according to its bidding information (that is, pack the service data reported in the bidding information to generate the to-be-verified target block).

In a specific embodiment, the first representative node a computer device. The computer device obtains the upload information of the blockchain, and the upload information indicates the type to which the next to-be-uploaded block is required to belong. The computer device may have the knowledge of the type, to which the next to-be-uploaded block is required to belong, according to the upload information.

In step S202, a target block to be verified through a consensus mechanism in the blockchain network is obtained, where the target block is generated from data of an inter-chain service.

The representative node having a proposal privilege in the blockchain packs block data, which is to be uploaded onto the blockchain, to obtain the target block to be verified through the consensus mechanism. The target block being generated from the data of the inter-chain service refers to that the target block is obtained through packing piece(s) of service data of the inter-chain service. Each inter-chain service may be the independent inter-chain service, at least two parties participate in the inter-chain service, and each service party provides at least one piece of service data which is deposited. That is, each co-exclusive block stores the service data related to an inter-chain service. In a specific embodiment, there are M blocks in the blockchain, and the upload information indicates the type to which the $(M+1)^{th}$ block is required to belong. In such case, the target block to be verified through the consensus mechanism may be obtained through packing to-be-uploaded block data related to the $(M+1)^{th}$ block (i.e., the service data which the representative node indicates to be packed in the $(M+1)^{th}$ block in its bidding information). The representative node of the block having the proposal privilege refers to the representative node which obtains a privilege of packing the $(M+1)^{th}$ block (i.e., the privilege of generating the target block to be verified through the consensus mechanism) in the blockchain network.

In an embodiment, the representative node having the proposal privilege may obtain deposited information of one or more pieces of service data, which includes data of the inter-chain service, related to the $(M+1)^{th}$ block from a resource pool of the blockchain network, and generate the target block to be verified through the consensus mechanism according to the deposited information of the one or more pieces of service data.

After generating the target block, the representative node having the proposal privilege broadcasts the target block to each representative node in the blockchain network. The first representative node may obtain the target block to be verified through the consensus mechanism through the broadcast of the representative node having the proposal privilege.

In a specific embodiment, a computer device obtains the target block to be verified through the consensus mechanism in the blockchain network. The representative node having the proposal privilege generates the target block according to data of an inter-chain service. The representative node having the proposal privilege may broadcast the generated target block, so that the computer device obtains the target block.

In step S203, the target block is determined to serves as the next block to be uploaded onto the blockchain and is added into the blockchain, in response to the upload information indicating that the block type is a co-exclusive type, where each block of the co-exclusive type stores data of a respective independent inter-chain service.

Types of blocks may include the co-exclusive type. Blocks of the co-exclusive type each corresponds to a service, that is, the block is configured to store data originating or received from at least two parties participating in such service, and not store data of any party not participating in such service. Herein a party refers to a person or an organization involved in a service, for example, the party participates in the service through a terminal device capable of accessing the blockchain Network. Each co-exclusive block is used for storing a respective independent inter-chain service. Herein each inter-chain service may serve as the independent inter-chain service, which means at least two parties participate in the inter-chain service, and each service party provides at least one piece of service data which is to be deposited. That is, each co-exclusive block stores the service data related to an inter-chain service. For example, service party A and service party B participate in inter-chain service 1, service party B and service party C participate in inter-chain service 2, and service party A, service party B, and service party C all participate in inter-chain service 3. In such case, inter-chain services 1 to 3 each is called an independent inter-chain service. That is, data of inter-chain service 1 to inter-chain service 3 is stored into three different co-exclusive blocks, respectively. Service data related to inter-chain service 1 cannot be stored in the block for storing service data related to inter-chain service 2 or inter-chain service 3. Similarly, the service data related to inter-chain service 2 cannot be stored in the block for storing the service data related to inter-chain service 1 or inter-chain service 3, and the service data related to inter-chain service 3 cannot be stored in the block for storing the service data related to inter-chain service 1 or inter-chain service 2.

Herein the type to which the next to-be-uploaded block is required to belong being the co-exclusive type indicates that the next block to be verified through the consensus mechanism in the blockchain is required to store the service data of an independent inter-chain service. In such case, computer device may determine the target block to serve as such next to-be-uploaded block and add the target block on the blockchain. That is, the target block is subject to processing of uploading onto the blockchain. In a specific embodiment, the computer device may perform the check on the target block according to a consensus rule for the co-exclusive type, and adds the target block onto the blockchain as the next to-be-uploaded block after the target block passes the check. Thereby, blocks are uploaded onto the blockchain more accurately. The consensus rule is configured for checking whether the target block meets a condition for uploading onto the blockchain (e.g., checking whether pieces of service data in the target block belongs to the same inter-chain service, checking whether service parties of the target block match identifiers of multiple co-exclusive parties of the $(M+1)^{th}$ block which are indicated by the upload information, and the like).

In an embodiment, the first representative node checks the target block according to the consensus rule, and then determines a final check result according to a result of checking the target block on its own and results of checking the target block, which are broadcasted by representative nodes other than the first representative node in the blockchain network. The target block passing the check refers to that the first representative node determines that the target block meets a condition for uploading onto the blockchain (an uploading condition) according to the result of checking the target block on its own and the results of checking the target block, which are broadcasted by representative nodes other than the first representative node in the blockchain network. The first representative node records the target block to be the $(M+1)^{th}$ block of the blockchain. When the type to which the next to-be-uploaded block is required to belong is the co-exclusive type, the target block generated from the data of the inter-chain service is added onto the blockchain. It is prevented that data of an inter-chain service in multiple blocks are separately processed when handling the inter-chain service. Thereby, effective isolated process is implemented among the inter-chain services, interactive processing among multiple blocks is reduced, and hence the inter-chain services are processed with higher efficiency.

Herein the upload information of the blockchain and the target block to be verified through the consensus mechanism in the blockchain network are obtained. In a case that the upload information indicates that the type to which the next to-be-uploaded block is required to belong is the co-exclusive type, of which each block stores the data of the respective independent inter-chain service, the target block is determined to serve as the next to-be-uploaded block and added onto the blockchain. Hence, when there is inter-chain interaction, the service data of the independent inter-chain services can be stored in blocks of the co-exclusive type. Such solution is advantageous over that verification on an inter-chain service requires checking relevant service data in multiple blocks. Thereby, the inter-chain services can be verified and processed with higher efficiency.

In an embodiment, determining the target block to serve as the next to-be-uploaded block and added the target block on to the blockchain in response to the upload information indicating that the block type is the co-exclusive type comprises following steps. A check is performed on the target block according to a consensus rule for the co-exclusive type, in response to the upload information indicating that the block type is the co-exclusive type. The target block is determined to serve as the next to-be-uploaded block and added onto the blockchain, in response to that the target block passing the check.

The consensus rule is configured for checking whether the target block meets the uploading condition, and the uploading condition may be determined according to the upload information. For example, the checking includes, but is not limited to, checking whether pieces of service data in the target block belongs to the same inter-chain service, checking whether the service parties of the target block match the identifiers of multiple co-exclusive parties of the $(M+1)^{th}$ block which are indicated in the upload information, and the like. The target block passing the check refers to that the first representative node determines that the target block meets the uploading condition according to a result of checking the target block on its own and results of checking the target block, which are broadcasted by representative nodes other than the first representative node in the blockchain network. In case of passing the check, the target block can be uploaded to the blockchain.

In a specific embodiment, when the upload information indicates that the type to which the next to-be-uploaded block is required to belong is the co-exclusive type, it indicates that the next to-be-uploaded block is required to carry data of an inter-chain service. In such case, a computer device may fetch the consensus rule for the co-exclusive type through query, and performs the check on the target block according to such consensus rule. When the target block passes the check, the computer device adds the target block onto the blockchain as the next to-be-uploaded block of the blockchain. Thereby, the target block is uploaded onto the blockchain.

Herein the computer device performs the check on the target block according to the consensus rule for the co-exclusive type, and adds the target block onto the blockchain in a case that the target block passes the check. Thereby, it is ensured that the target block meets the uploading conditions, and a successful rate of uploading the target block is guaranteed.

Figure 3 shows a flowchart of a method for processing data based on a blockchain according to another embodiment of the present disclosure. The blockchain comprises M interconnected blocks, where M is a positive integer. The blockchain is deployed in a blockchain network. Reference is made to Figure 1e, where the blockchain network comprises a witness subnet and a consensus subnet. The witness subnet comprises at least one service node, and the consensus subnet comprises N consensus clusters, where N is an integer greater than 1. Each consensus cluster comprises multiple accounting nodes, one of which is elected as a representative node of such consensus cluster. The N representative nodes form a consensus committee of the blockchain. The method is executed at a first representative node in the consensus committee, and the first representative node may be an arbitrary representative node in the consensus committee. The method may include, but is not limited to, steps S301 to S305.

In step S301, a bidding result for the next block to be uploaded onto the blockchain is obtained, where the bidding result indicates a second representative node, which obtains a privilege of proposing the next block to be uploaded onto the blockchain, and bidding information, which is submitted by the second representative node for the next block to be uploaded onto the blockchain.

All representative nodes in the blockchain network perform consensus processing on the bidding information for the next to-be-uploaded block to obtain the bidding result for the next to-be-uploaded block. Specifically, the second representative node, which has the privilege of proposing the next to-be-uploaded block and is determined based on the pieces of bidding information, submits the bidding result for the next to-be-uploaded block. The bidding result may indicate the second representative node that obtains the privilege of proposing the next to-be-uploaded block, and indicates the bidding information submitted by the second representative node for the next to-be-uploaded block. When there are M blocks in the blockchain, all representative nodes in the blockchain network perform consensus processing on the pieces of bidding information for the $(M+1)^{th}$ block (e.g., determines a second representative node having a privilege of proposing the $(M+1)^{th}$ block according to the bidding information) so as to obtain the bidding result of the $(M+1)^{th}$ block. The bidding result of the $(M+1)^{th}$ block carries the block type to which the $(M+1)^{th}$ block is required to belong.

During an upload (or consensus) process of the $M^{th}$ block, each representative node which requires to bid for the $(M+1)^{th}$ block broadcasts the bidding information to other representative nodes in the blockchain network. The bidding information is for bidding for the privilege of proposing the $(M+1)^{th}$ block (i.e., for bidding for an exclusive block or a co-exclusive block). The bidding information carries information concerning service data to be packed in the $(M+1)^{th}$ block (e.g., an amount of service data to be packed in the $(M+1)^{th}$ block, identifier(s) of service parti(es) related to the $(M+1)^{th}$ block, and a type of the service data to be packed in the $(M+1)^{th}$ block). The representative node that obtains the privilege of proposing the $(M+1)^{th}$ block may produce a target block, which is to be verified through a consensus mechanism, according to its bidding information (that is, pack the service data reported in the bidding information to generate the to-be-verified target block). For example, representative node 1 needs to deposit 1000 pieces of service data related to itself, and hence broadcasts bidding information 1 to the consensus committee. Bidding information 1 indicates that the representative node 1 requests to obtain the privilege of proposing the $(M+1)^{th}$ block, and comprises an amount of service data that needs to be stored in the $(M+1)^{th}$ block by representative node 1, an identifier (e.g., address or signature) of representative node 1, and resources for bidding for the $(M+1)^{th}$ block. In case of obtaining the privilege of proposing the $(M+1)^{th}$ block finally, representative node 1 generates a target block, which is to be verified through a consensus mechanism, according to the amount of the service data that needs to be stored in the $(M+1)^{th}$ block as indicated in bidding information 1.

In an embodiment, the identifier of the representative node requesting to obtain the privilege of proposing the $(M+1)^{th}$ block and the amount of service data to be stored in the $(M+1)^{th}$ block are specified in a bidding transaction. When trying to reach a consensus on the bidding transaction, the consensus committee checks whether an amount of to-be-deposited service data in a resource pool meets the amount specified in the bidding transaction. For example, assuming that the bidding transaction specifies that the second representative node would store 1000 pieces of exclusive service data in the $(M+1)^{th}$ block, the consensus committee tries to reach the consensus on the bidding transaction through checking whether a transaction pool comprises more than 1000 pieces of exclusive service data or ordinary service data from the second representative node. In addition, the consensus committee may check whether a privilege of the representative node initiating the bidding transaction in a smart contract is valid currently (e.g., check whether service data in a last block of a sub-blockchain maintained by the representative node has been successfully uploaded onto a public blockchain maintained jointly by members in the consensus committee).

During an inter-chain service, after inter-chain interactions among multiple consensus clusters are completed, the service parties participating in a corresponding interchain service negotiate to select one representative node randomly, and the representative node carries signatures of all service parties to bid for a co-exclusive block. The bidding information comprises identifiers of the service parties which would own the $(M+1)^{th}$ block co-exclusively, an amount of service data to be stored into the $(M+1)^{th}$ block by each service party, and the like. For example, consensus cluster 1 to consensus cluster 3 participate in and completes inter-chain service 1, consensus clusters 1 to 3 may determine representative node 1 of consensus cluster 1 as their representative through negotiation, and representative node 1 applies for a co-exclusive block for storing service data related to inter-chain service 1 on behalf of the consensus clusters 1 to 3. In such case, bidding information 1 generated by the representative node 1 may comprise the identifiers of the representative nodes of the consensus clusters 1 to 3, the amount of service data to be stored into the $(M+1)^{th}$ block by each of the consensus clusters 1 to 3 (i.e., by each service party), and the like.

In an embodiment, the bidding information comprises at least one of: an amount of service data to be packed in the next to-be-uploaded block, an identifier of a service party related to the service data, and a type of the service data.

The target block stores the to-be-deposited service data of each service party. The amount of service data to be packed in the next to-be-uploaded block refers to an amount used by each of multiple co-exclusive parties. The target block is for a target service, and the identifier of the service party related to the service data may refer to an identifier of the target service. The type of service data refers to a type of data of an inter-chain service to be packed in the next to-be-uploaded block.

Herein the bidding information comprises at least one of: the amount of service data to be packed in the next to-be-uploaded block, the identifier of the service party related to the service data, and the type of the service data. Thereby, the corresponding upload information can be generated from the bidding information, such that the target block can be verified through the consensus mechanism based on the upload information. Data of the inter-chain service can be processed more accurately.

In one embodiment, the bidding information comprises a waiting period and a quantity of resources for bidding. The consensus committee performs the consensus check, in a consensus, based on the waiting period and the quantity of resources for bidding in the bidding information, and the bidding result is generated in a case that the bidding information passes the check (i.e., verified in the consensus).

In an embodiment, the consensus committee performs the consensus check on bidding information sent by each representative node based on the waiting period and the quantity of resources for bidding in such bidding information (for example, may check whether a resource pool of the blockchain network comprises to-be-deposited service data indicated by the bidding information, whether an amount of the to-be-deposited service data in the resource pool meet an amount indicated by the bidding information, and the like). The bidding information for a block of the co-exclusive type is taken as an example. The bidding information may comprise the identifier(s) of service parti(es) participating in an inter-chain service and the amount of service data to be packed in the $(M+1)^{th}$ block by each service party. The consensus committee may check whether service parties indicated by the bidding information participate in such inter-chain service, whether the amount of service data to be packed in the $(M+1)^{th}$ block by each service party is correct, and the like. The corresponding bidding result is generated after the bidding information passes the check. In an embodiment, there may be multiple representative nodes bidding for a block, and a bidding measurement is calculated based on the waiting period and the quantity of resources for bidding. The consensus check is performed on the bidding information having the largest bidding measurement. For example, the bidding measurement may be calculated as: Bidding measurement = (Waiting period + Quantity of resources for bidding) * Weight representing a priority in a service. It is assumed that a national tax bureau has the waiting period of 3 minutes, the quantity of resources for bidding equal to 97, and the weight representing the priority equal to 0.8, a municipal tax bureau has the waiting period of 5 minutes, the quantity of resources for bidding equal to 145, and the weight representing priority equal to 0.5, and a county tax bureau has the waiting period of 20 minutes, the quantity of resources for bidding equal to 180, and the weight representing priority equal to 0.3. In such case, the bidding measurement of the national tax bureau is equal to (3+97)*0.8=80, the bidding measurement of the municipal tax bureau is equal to (5+145)*0.5=75, and the bidding measurement of the county tax bureau is equal to (20+180)*0.3=60. Due to 80 > 75 > 60, the consensus check is performed on the bidding information broadcasted by the national tax bureau. In a case that such bidding information passes the check, the bidding result is generated based on such bidding information.

Herein the consensus committee performs the consensus check on the bidding information based on the waiting period and the quantity of resources for bidding in the bidding information, and accordingly generates the bidding result.

Thus, authority and validity of the bidding result is ensured, and an order of processing data based on the blockchain is guaranteed.

In an embodiment, the waiting period is negatively correlated with a required quantity of resources for bidding. The bidding information is obtained at least through a weighted sum of the waiting period and the quantity of resources for bidding.

The bidding information comprises the waiting period and the quantity of resources for bidding, and the bidding information may be evaluated as a sum of the weighted waiting period and the weighted quantity of resources for bidding. As a simple solution, the waiting period is inversely proportional to the required quantity of resources for bidding (i.e., the longer the waiting period is, the less the required bidding resources are, and the shorter the waiting period is, the more the required bidding resources are). The waiting period refers to a period from a moment a target representative node requests the privilege of proposing a block to a current moment (during which the target representative node does not obtain the privilege of proposing the block). The target representative node may be an arbitrary representative node in the consensus committee. As example, representative node 1 requests the privilege of proposing the block 10 minutes ago and does not obtain such privilege in the last 10 minutes, and thus the waiting period of representative node 1 is 10 minutes. As another example, representative node 2 requests the privilege of proposing a block 30 minutes ago, obtains such privilege 17 minutes ago, and obtains such privilege again 8 minutes ago, and thus the waiting period of representative node 2 is 8 minutes. The resources for bidding may be determined according to an actual situation. For example, the resources for bidding may comprises one or more of: real resources, virtual objects, an amount of to-be-deposited service data, and the like.

Herein the bidding information is determined through a weighted sum of the waiting period and the quantity of resources for bidding, which balances influences of the waiting period and the quantity of resources for bidding effectively. An effect of attributing the proposal privilege is ensured, and an order of processing data based on the blockchain is guaranteed.

In an embodiment, the bidding information is calculated as a weighted sum of: the waiting period, the quantity of resources for bidding, and the weight representing a priority in the service.

Different representative nodes may correspond to different priorities (taking tax bureaus as an example, in the corresponding service (i.e., invoicing), the priority of a national tax bureau is higher than that of a municipal tax bureau, and the priority of the municipal tax bureau is higher than that of a county tax bureau). The higher the priority is, the greater the corresponding weight is. The bidding information may be obtained through calculating the weighted sum of the waiting period, the quantity of resources for bidding, and the weight representing the priority in the service.

Herein the bidding information is obtained through calculating the weighted sum of the waiting period, the quantity of resources for bidding, and the weight representing the priority in the service, which balances influences of the waiting period and the quantity of resources for bidding effectively through the service priority. An effect of attributing the proposal privilege is ensured, and an order of processing data based on the blockchain is guaranteed.

In an embodiment, the resources for bidding comprises at least one of: real resources, virtual objects, or an amount of to-be-deposited service data.

The resources for bidding may be configured according to an actual requirement, and include but are not limited to the real resources, the virtual objects, and the amount of to-be-deposited service data. Different resources may be applied in different scenarios. Thus, the application scenarios of the method are expanded.

In an embodiment, the first representative node and the second representative node are different representative nodes. Obtaining the bidding result of the next block to be uploaded onto the blockchain comprises following steps. The bidding information submitted by the second representative node for the next block to be uploaded onto the blockchain is received when a block at a tail position in the blockchain is being verified through a consensus mechanism, where the bidding information is configured to request the privilege of proposing the next block to be uploaded onto the blockchain. A check is performed on the bidding information to reach a consensus. The bidding result broadcasted by the consensus committee is received.

The tail position refers to a position at which the last block uploaded onto the blockchain is located in the blockchain. For example, there are M blocks in the blockchain, and the block at the tail position in the blockchain is the $M^{th}$ block. In a specific embodiment, the first representative node receives the bidding information submitted by the second representative node for the $(M+1)^{th}$ block when the $M^{th}$ block in the blockchain is being verified through the consensus mechanism the blockchain. The bidding information is configured for requesting the privilege of proposing the $(M+1)^{th}$ block. The first representative node performs the check on the bidding information to reach the consensus, receives the bidding result broadcasted by the consensus committee (i.e., by the representative nodes other than the first representative node in the consensus committee), and determines a bidding result having a highest recurrence rate as the final bidding result. For example, among the bidding results obtained by the first representative node, a recurrence rate of generating bidding result 1 from bidding information 1 is 95%, the recurrence rate of generating bidding result 2 from bidding information 2 is 3%, and the recurrence rate of generating bidding result 3 from bidding information 3 is 2%. In such case, the first representative node determines bidding result 1 generated from bidding information 1 as the final bidding result.

Herein when the first representative node and the second representative node are different representative nodes, the first representative node receives the bidding information submitted by the second representative node, and then receives bidding result(s) that are broadcasted after such bidding information has been subject to the consensus check. Thereby, it is ensured that the final bidding result is based on the bidding information broadcasted by the second representative node having the proposal privilege, and accuracy of the bidding result is guaranteed.

In another embodiment, the first representative node and the second representative node are the same representative node. Obtaining the bidding result of the next block to be uploaded onto the blockchain comprises following steps. The bidding information for the next to-be-uploaded block is submitted to the consensus committee when a block at a tail position of the blockchain is being verified through the consensus mechanism, where the bidding information is configured for requesting the privilege of proposing the next block to be uploaded onto the blockchain. A check is performed on the bidding information to reach a consensus. A bidding result broadcasted by the consensus committee is received.

The tail position refers to a position at which the last block uploaded onto the blockchain is located in the blockchain. In a specific embodiment, the first representative node submits the bidding information for the $(M+1)^{th}$ block to the consensus committee when the $M^{th}$ block in the blockchain is being verified through the consensus mechanism, where the bidding information is configured for requesting the privilege of proposing the $(M+1)^{th}$ block. The first representative node performs the check on the bidding information to reach the consensus, receives the bidding result broadcasted by the consensus committee (i.e., by the representative nodes other than the first representative node in the consensus committee), and determines a bidding result having a highest recurrence rate as the final bidding result..

Herein when the first representative node and the second representative node are the same representative node, the first representative node submits the bidding information directly, and receives the broadcasted bidding result after such bidding information has been subject to the consensus check. Thereby, it is ensured that the final bidding result is based on the bidding information broadcasted by the first representative node having the proposal privilege, and accuracy of the bidding result is guaranteed.

In step S302, the upload information of the next block to be uploaded onto the blockchain is generated according to the bidding result.

In an embodiment, the first representative node determines the second representative node (i.e., the representative node having the privilege of proposing the $(M+1)^{th}$ block) according to the bidding result, and generates the upload information of the $(M+1)^{th}$ block according to the bidding information broadcasted by the second representative node. For example, the first representative node may determine the bidding information broadcasted by the second representative node as the upload information of the $(M+1)^{th}$ block. The first representative node may alternatively extract some data from the bidding information broadcasted by the second representative node (e.g., identifier(s) of service parti(es) related to the $(M+1)^{th}$ block, an amount of to-be-deposited service data of each service party, or the like), and generate the upload information of the $(M+1)^{th}$ block according to the extracted data. Herein the upload information is generated according to the bidding result of the next to-be-uploaded block. In a specific embodiment, the upload information is generated based on the bidding information submitted by the second representative node for the next to-be-uploaded block in the blockchain, which is indicated by the bidding result. Thereby, the upload information of the next to-be-uploaded block can be accurately obtained, such that the type to which the next to-be-uploaded block is required to belong can be accurately determined.

In an embodiment, generating the upload information of the next block to be uploaded onto the blockchain according to the bidding result comprises following steps. Bidding information is extracted from the bidding result. The upload information of the next block to be uploaded onto the blockchain is generated according to the extracted bidding information.

In an embodiment, the bidding result carries the bidding information. A computer device extracts the bidding information from the obtained bidding result, generates the upload information of the next to-be-uploaded block based on the extracted bidding information, and further determines a type to which the next to-be-uploaded block is required to belong based on the upload information. Herein the bidding information is extracted from the bidding result to generate the upload information, and thereby the type to which the next to-be-uploaded block is required to belong can be determined based on the bidding information submitted by the second representative node having the proposal privilege. An order of processing data based on the blockchain is guaranteed.

In step S303, a target block to be verified through a consensus mechanism in a blockchain network is obtained.

In an implementation, the first representative node and the second representative node are different representative nodes. The first representative node obtains the target block which is broadcasted by the second representative node.

Alternatively, the first representative node and the second representative node are the same representative node. The first representative node obtains data of each service party in a target inter-chain service from a resource pool of the blockchain network, and generates a target block according to the data of all service parties.

In a specific embodiment, the first representative node determines whether a result of a bidding transaction is packed in the $M^{th}$ block, when the $M^{th}$ block is being verified through the consensus mechanism. In a case that the result of a bidding transaction is packed in the $M^{th}$ block, the upload information of the $(M+1)^{th}$ block is generated according to the such result. The first representative node obtains the data of each service party in the target inter-chain service from the resource pool of the blockchain network, and generates the target block accordingly, such that the data of the inter-chain service can be processed with high efficiency.

In a case that the upload information of the $(M+1)^{th}$ block indicates that the $(M+1)^{th}$ block is required to be of an exclusive type, the $(M+1)^{th}$ block can only store exclusive service data and ordinary service data, which is related to the representative node indicated by the result of the bidding transaction (that is, the exclusive service data is stored first, and then the ordinary service data is stored to fill the target block completely, such that the amount of service data in the $(M+1)^{th}$ block meets the amount indicated by the upload information).

In an embodiment, data indicating a reduction in resources for bidding for the $(M+1)^{th}$ block is generated, and such data is packed into the target block along with the service data.

In a case that the upload information of the $(M+1)^{th}$ block indicates that the $(M+1)^{th}$ block is required to be of the co-exclusive type, the $(M+1)^{th}$ block can only store co-exclusive service data related to the inter-chain service indicated by the result of the bidding transaction.

In a case that the upload information of the $(M+1)^{th}$ block indicates that the $(M+1)^{th}$ block is required to be of an ordinary type, the $(M+1)^{th}$ block is configured for storing ordinary service data in a resource pool, transaction data concerning a global update on configurations of the blockchain, and the like.

In a case that T consecutive blocks on the blockchain are of either the exclusive type or the co-exclusive type, the smart contract is altered to determine that the type to which the target block is required to belong is the ordinary type (i.e., it is necessary to generate an ordinary block after generating T consecutive blocks which are either exclusive or co-exclusive in the blockchain), where T is a positive integer.

The resource pool may comprise service data of the three types. A first type is exclusive service data (that is, data of a service which only allows a party to participate), which can only be stored in the exclusive block. A second type is co-exclusive service data (that is, data of a service which allows at least two parties to participate and excludes participation of any other party), which can only be stored in a co-exclusive block. The co-exclusive block stores the co-exclusive service data related to an inter-chain service in which 2 to N service parties participate. The co-exclusive service data related to the inter-chain service may be specially labelled, that is, the service data carries identifiers of sub-blockchains (i.e., private chains maintained by consensus clusters) of the service parties participating in the inter-chain service and identifiers of all service parties (e.g., an address of each service party, and a signature of each service party. A third type is ordinary service data (that is, data of a service not dedicated to any certain participant), which may be stored in an ordinary block or an exclusive block. In the exclusive block, a priority of the ordinary service data is lower than that of the exclusive service data.

In step S304, a check is performed on the target block according to a consensus rule for a co-exclusive type, in response to the upload information indicating that a block type of the next block to be uploaded onto the block chain is the co-exclusive type.

Performing the check on the target block according to the consensus rule for the co-exclusive type comprises a following step. The first representative node performs checks validity of the target block according to the upload information, and the consensus committee determines a final result of the check through voting.

The check performed on the target block according to the consensus rule for the co-exclusive type may be conducted through one or more following manners.

In an embodiment, the target block is for a target service, and stores inter-chain data of the target service. Performing the check on the target block according to the consensus rule for the co-exclusive type comprises following steps. It is checked whether the target service is an independent inter-chain service. The target block is determined to pass the check, in a case that the target service is the independent inter-chain service.

A computer device at the first representative node may check whether the target service is the independent inter-chain service. In a specific embodiment, the computer device of the first representative node may check whether data of the target service is of the co-exclusive type. In a case that the data of the target service is not of the co-exclusive type, it is determined that the target service is not the independent inter-chain service, and the target block fails the check. In a case that the data of the target service is of the co-exclusive type, it is determined that the target block passes the check, and can be added onto the blockchain.

Moreover, when determining that the data of the target service is of the co-exclusive type, the computer device may further check whether identifiers of service parties of the target service, which are carried in the data of the target service, match. In a case that the identifiers of the service parties carried in the data of the target service match, it is determined that the target service is the independent inter-chain service, and the target block passes the check. In a case that the identifiers of the service parties carried in the data of the target service do not match, it is determined that the target service is not the independent inter-chain service, and the target block fails the check. For example, it is assumed that that service party A and service party B participate the target service. In a case that the service data concerning service party A carries only an identifier of service party B (and an identifier of service party A) and the service data concerning service party B carries only an identifier of service party A (and an identifier of service party B), it is determined that the target service is the independent inter-chain service, and the target block passes the check. Contrarily, in a case that the service data concerning service party A carries an identifier of a service party other than (service party A and) service party B (e.g., carries an identifier of service party C) or the service data concerning service party B carries an identifier of a service party other than service party A (and service party B) (e.g., carries an identifier of service party D), it is determined that the target service is not the independent inter-chain service, and the target block fails the check.

Herein the computer device checks the target service related to the target block to determine whether the target service is the independent inter-chain service, so as to implement the checking on the target block. Thereby, it is ensured that the target block meets a service condition for the next to-be-uploaded block, and that the next block is correctly added onto the blockchain.

In another embodiment, the target block is for the target service, and stores identifiers of multiple service parties participating in the target service, and the upload information further indicates the identifiers of co-exclusive parties of the next to-be-uploaded block. Performing the check on the target block according to the consensus rule for the co-exclusive type comprises following steps. It is checked whether the identifiers of the multiple service parties in the target block are consistent with the identifiers of the co-exclusive parties of the next to-be-uploaded block. The target block is determined to pass the check in a case that the identifiers of the multiple service parties in the target block are consistent with the identifiers of the co-exclusive parties of the next to-be-uploaded block.

In an embodiment, the first representative node checks whether the identifiers of the multiple service parties in the target block are consistent with the identifiers of the co-exclusive parties in the next to-be-uploaded block. When there are M blocks in the blockchain, it is determined whether the identifiers of the multiple service parties in the target block are consistent with the identifiers of the co-exclusive parties of the $(M+1)^{th}$ block. The target block passes the check in a case that the identifiers of the multiple service parties in the target block are consistent with the identifiers of the co-exclusive parties of the $(M+1)^{th}$ block. The target block fails the check in a case that the identifiers of the multiple service parties in the target block are not consistent with the identifiers of the co-exclusive parties of the $(M+1)^{th}$ block. For example, the target block stores the identifiers of service party 1 and service party 2 which participate in the target service, and the upload information indicates that the identifiers of the co-exclusive parties of the $(M+1)^{th}$ block are the identifiers of service party 1 and service party 2. In such case, the first representative node determines that the target block passes the check, and the target block can be added onto the blockchain.

Herein the computer device checks the identifiers of service parties of the target service related to the target block to determine whether the identifiers of the multiple service parties in the target block are consistent with the identifiers of the co-exclusive parties of the next to-be-uploaded block, so as to implement the checking on the target block. Thereby, it is ensured that the target block meets a service condition for the next to-be-uploaded block, and that the next block is correctly added onto the blockchain.

In an embodiment, the target block further stores to-be-deposited service data of each service party, and the upload information further indicates a data amount claimed by each co-exclusive party. The method further comprises following steps after determining that the identifiers of the multiple service parties in the target block are consistent with the identifiers of the co-exclusive parties of the next to-be-uploaded block. An amount of the to-be-deposited service data of each service party is determined in the target block. It is checked whether the amount of the to-be-deposited service data of each service party matches the data amount claimed by the co-exclusive party corresponding to such service party. In a case that the amount of to-be-deposited service data of each service party matches the data amount claimed by the co-exclusive party corresponding to such service party, it is determined that the target block passes the check.

In an embodiment, the first representative node obtains the amount of to-be-deposited service data of each service party in the target block (e.g., count a volume of to-be-deposited service data of each service party in the target block), and checks whether the amount of to-be-deposited service data of each service party matches the data amount claimed by the corresponding co-exclusive party (e.g., check whether the amount of to-be-deposited service data of each service party in the target block is identical to the data amount claimed by the corresponding co-exclusive party). In a case that the amount of the to-be-deposited service data of each service party matches the data amount claimed by the corresponding co-exclusive party, the target block passes the check. In a case that the amount of the to-be-deposited service data of at least one service party does not match the data amount claimed by the corresponding co-exclusive party, it is determined that the target block fails the check. For example, it is assumed that there are two pieces of to-be-deposited service data of service party 1 and a piece of to-be-deposited service data of service party 2 in the target block, and the upload information indicates that the data amount claimed by service party 1 is 2 pieces and the data amount claimed the service party 2 is 1 piece. In such case, the first representative node determines that the target block passes the check.

Herein the computer device checks the amount of to-be-deposited service data of each service part in the target block to determine whether the amount of the to-be-deposited service data of each service party in the target block matches the data amount claimed by the corresponding co-exclusive party of the next to-be-uploaded block, so as to implement the checking on the target block. Thereby, it is ensured that the target block meets a service condition for the next to-be-uploaded block, and that the next block is correctly added onto the blockchain.

In an embodiment, the target block is for a target service in which multiple service parties participate, and each service party refers to one of the consensus clusters in the consensus subnet. The target block further stores the to-be-deposited service data of each service party. Each service party maintains a sub-blockchain (i.e., each consensus cluster maintains a private chain for storing data of service(s) within the consensus cluster). Performing the check on the target block according to the consensus rule for the co-exclusive type comprises following steps. It is checked whether the to-be-deposited service data of each service party in the target block has been stored in the sub-blockchain of such service party. The target block is determined to pass the check, in a case that the to-be-deposited service data of each service party in the target block has stored in the sub-blockchain of such service party.

In an embodiment, the first representative node checks whether the to-be-deposited service data of each service party in the target block has been stored in the respective sub-blockchain of such service party (e.g., the first representative node transmits a conformation request to each service party to confirm that the to-be-deposited service data of each service party has been stored in the respective sub-blockchain of such service party). It is determined that the target block passes the check, in a case that the to-be-deposited service data of each service party in the target block has been stored in the sub-blockchain of such service party. It is determined that the target block does not pass the check, in a case that the to-be-deposited service data of at least one service party in the target block has not been stored in the sub-blockchain of the corresponding service party.

Herein the computer device checks whether the to-be-deposited service data in the target block has been stored in the respective sub-blockchain of the corresponding service party. Thereby, it is ensured that the corresponding to-be-deposited service data has been stored in the respective sub-blockchain for each service party, that the target block meets a condition of storing the to-be-deposited service data in a sub-chain for the next to-be-uploaded block, and that the next block is correctly added onto the blockchain.

In step S305, the target block is determined to serve as the next block to be uploaded onto the blockchain and is added into the blockchain, in a case that the target block passes the check.

The $(M+1)^{th}$ block carries an identifier of the type of such block and the identifiers of service parties related to the $(M+1)^{th}$ block. In an embodiment, the new block is added onto the blockchain through a following process.

(1) The second representative node for uploading the $(M+1)^{th}$ block generates a target block to be verified through the consensus mechanism;

(2) The second representative node for uploading the $(M+1)^{th}$ block broadcasts the target block to representative node(s) other than the second representative node in the consensus committee.

(3) The representative nodes in the consensus committee check the target block, and each broadcasts its respective check result to other representative nodes in the consensus committee. As an example, each representative node votes to indicates its approval on one check result.

(4) Each representative node in the consensus committee collects the votes from other representative nodes in the consensus committee, and broadcasts a voting result indicating a check result having won votes of a proportion greater than a threshold (e.g., 2/3).

(5) Each representative node in the consensus committee collects the voting results of other representative nodes in the consensus committee. In a case that a check result indicating that the target block passes the check are indicated in voting results of a proportion greater than a threshold (e.g., 2/3), it is indicated that the target block has been verified through the consensus mechanism.

(6) The target block is determined to serve as the $(M+1)^{th}$ block in the blockchain. Then, a new second representative node corresponding to the $(M+2)^{th}$ block is determined according to a bidding result that reaches a consensus.

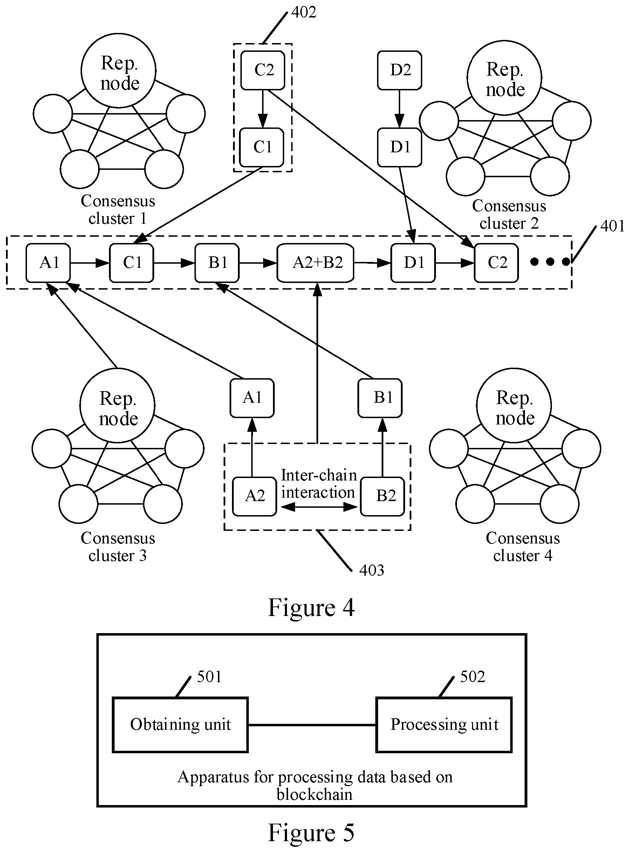

Figure 4 shows a schematic diagram of a scenario of processing data based on a blockchain according to an embodiment of the present disclosure. Hereafter brief introduction is made in conjunction with Figure 4 for illustrating a detailed implementation of the method for processing data based on the blockchain according to embodiments the present disclosure. As shown in Figure 4, the consensus subnet comprises N consensus clusters, where N is an integer greater than 1. An accounting node among each consensus cluster in the consensus subnet may be selected as the representative node, and the N representative nodes form the consensus committee. The consensus committee maintains the blockchain 401 for the consensus subnet, and the blockchain 401 is the main chain in the blockchain network. The N consensus clusters may bid for the proposal privilege in the blockchain network. After obtaining the proposal privilege, the consensus cluster has the proposal privilege and is responsible for generating the target block to be verified through the consensus mechanism. The representative node of such consensus cluster is responsible for broadcasting the target block to be verified through the consensus mechanism to each representative node in the consensus committee, such that the consensus committee can perform process concerning a consensus. As an example, the representative node of consensus cluster 3 broadcasts block A1 in the blockchain 401 to the representative nodes in the consensus committee. As another example, the representative node of consensus cluster 1 broadcasts block C1 in the blockchain 401 to the representative nodes in the consensus committee. Thereby, the service data throughout the entire consensus subnet can be recorded in the blockchain which is maintained by the consensus committee, which facilitates management and review of the service data provided by different consensus clusters in the consensus subnet.

Each consensus cluster may further maintain its own sub-blockchain which only comprises blocks concerning its own service, which facilitates the consensus cluster managing its own service data. In an embodiment, when a new block is generated in a consensus cluster, the new block may anchor a previous block generated in such consensus cluster, and hence the sub-blockchain of the consensus cluster is organized. As shown in Figure 4, consensus cluster 1 may organize its own sub-blockchain 402. The sub-blockchain 402 comprises block C1 and block C2 that are generated in consensus cluster 1. When block C2 is generated in consensus cluster 1, block C2 may be anchored to its previous block, C1, in the sub-blockchain 401 of consensus cluster 1, that is, block C2 records a subprehash, i.e., a hash, of previous block C1 in the sub-blockchain 402 of the consensus cluster 1. When the representative node submits the block C2 is submitted to the blockchain 401 of the consensus subnet for a consensus, the block C2 may further be anchored to a previous block in the blockchain 401. In such case, a prehash, i.e., a hash, of block D1 in the blockchain 401 is recorded in block C2. Accordingly, each consensus cluster may organize its own sub-blockchain through the subprehashes in the blocks to facilitate management its own service data, and the consensus committee may maintain the blockchain of the entire consensus subnet to facilitate unified management and unified review of service data of the entire consensus subnet.

Moreover, the consensus clusters in the consensus subnet may perform inter-chain interactions (i.e., execute a inter-chain service). Specifics are as follows.

(1) The accounting nodes in each consensus cluster supports that an accounting node in another consensus cluster initiates an inter-chain request toward them (e.g., requests data interaction for an inter-chain service).

(2) A service smart contract corresponding to the inter-chain request is registered in advance in the accounting nodes of each consensus cluster.

(3) The inter-chain service is invoked after a connection is established among accounting nodes of at least two consensus clusters. The service data, which is related to the inter-chain service and is generated during the invoking, is required to be packed as a block in the sub-blockchain of each consensus cluster. As shown in Figure 4, A2 is the block packed in the sub-blockchain of consensus cluster 3, and B2 is the block packed in the sub-blockchain of consensus cluster 4. A block of a co-exclusive type is only capable to store service data which is also of the co-exclusive type and related to inter-chain service (e.g., the service data in A2 and B2). The inter-chain interactions between consensus cluster 3 and consensus cluster 4 belongs to an independent inter-chain service. The co-exclusive service data related to one independent inter-chain service can only be stored into one co-exclusive block, and the co-exclusive service data related to multiple independent inter-chain services cannot be mixed and packed together into one co-exclusive block.

(4) Similar to (3), each representative node can bid for the co-exclusive block. Each time an independent inter-chain service is initiated, bidding is performed for a co-exclusive block.

(5) The inter-chain service involves conformation of multiple parties. Hence, as shown in Figure 4, the consensus cluster 3 adds A2 onto the sub-blockchain maintained itself, and the consensus cluster 4 adds B2 onto the sub-blockchain maintained itself. Afterwards, the consensus cluster 3 and the consensus cluster 4 need to wait until block A2+B2 on the blockchain main chain passes the check, before each of them continues to add a new block to the corresponding sub-blockchain.

An invoicing service is taken as an example of the inter-chain service. The consensus algorithm is bound with a logic of processing electronic invoices in a blockchain. Each invoicing institution (e.g., local tax bureaus in different provinces and cities) obtains a privilege of producing a block through broadcasting its bidding information to the consensus committee. A part that obtains the privilege for the $(N+1)^{th}$ block is determined during a process of reaching a consensus on the $N^{th}$ block of the blockchain. After accumulating a certain amount of service data (invoicing data), each representative node of a corresponding tax bureau (e.g., an SPV node) may broadcast bidding information to the consensus committee to bid for a block of the exclusive type. The consensus committee determines which representative node has the privilege of proposing the next block based on the bidding information of each representative node. After winning in the bidding for the exclusive block, the representative node obtaining the privilege of proposing the next block pays a certain quantity of resources for bidding, which is correlated with its waiting period (weighting between the waiting period and the resources for bidding may be designed based on an actual requirement). All the accumulated exclusive service data (invoicing data) and accumulated ordinary service data (invoicing data), which are related to the representative node, would be packed into the exclusive block.

Herein the bidding for the exclusive block can enable the service data of a single consensus cluster (a corresponding institution) to be uploaded onto the block chain in a batch, and the exclusive block allows the single representative node to store its related service data into a single block to facilitate subsequent check and audit. Exclusive blocks are capable to achieve good isolation between service data of different representative nodes and achieve good protection on privacy. When searching for a piece of service data, unrelated blocks may be quickly skipped through the sub-blockchain maintained by each consensus cluster, which improves query efficiency. In addition, the bidding can meet a requirement of a representative node which needs to upload a large amount of service data as soon as possible, and a required quantity of resources for bidding can be calculated through considering the waiting period. Hence, overall efficiency and fairness of the blockchain network are both guaranteed. When considering the data processing solutions corresponding to the inter-chain service, not only a feasible scheme for interactions among multiple service parties is provided, but also independence of data of each inter-chain service data is guaranteed through co-exclusive blocks according to embodiments of the present disclosure. The sub-blockchain maintained by each consensus cluster can effectively synchronize its relevant inter-chain data. In practice, it has been proven that the foregoing solutions have good scalability and are suitable for scenarios in which there are multiple consensus clusters in a blockchain network and various inter-chain services are continuously added into the blockchain network.

Hereinabove the method embodiments are illustrated in detail. Correspondingly, thereinafter apparatus embodiments are provided for better implementation of the above solutions.

Figure 5 shows a structure diagram of an apparatus for processing data based on a blockchain according to an embodiment of the present disclosure. The apparatus may be deployed on a representative node as shown in Figure 1e. The apparatus as shown in Figure 5 may be configured to perform some or all of the functions in the foregoing method embodiments as described in conjunction with Figure 2 and Figure 3. The blockchain comprises at least one block, and is deployed in a blockchain network comprising a witness subnet and a consensus subnet. The witness subnet comprises at least one service node, and the consensus subnet comprises at least two consensus clusters. Each of the at least two consensus cluster comprises multiple accounting nodes, one of which is elected as a representative node of such consensus cluster. The representative nodes of all consensus clusters form a consensus committee of the blockchain. The apparatus may be deployed at a first representative node in the consensus committee, and the first representative node may be an arbitrary representative node in the consensus committee. Reference is made to Figure 5. Each unit is described in detail as follows.

An obtaining unit 501 is configured to obtain upload information of the blockchain, where the upload information indicates a block type to which a next block to be uploaded onto the blockchain is required to belong, and obtain a target block to be verified through a consensus mechanism in the blockchain network, where the target block is generated from data of an inter-chain service.

A processing unit 502 is configured to determine the target block to serve as the next block to be uploaded onto the blockchain and add the target block into the blockchain, in response to the upload information indicating that the block type is a co-exclusive type, where each block of the co-exclusive type stores data of a respective independent inter-chain service.

In an embodiment, the processing unit 502 is further configured to: perform a check on the target block according to a rule for the co-exclusive type, in response to the upload information indicating that the next block to be uploaded onto the blockchain is of the co-exclusive type; and determine the target block to serve as the next block to be uploaded onto the blockchain and add the target block into the blockchain, in response to the target block passing the check.

In an embodiment, the target block stores the data of the inter-chain service. The processing unit 502 is further configured to: check whether the inter-chain service is an independent inter-chain service; and determine that the target block passes the check, in response to that the inter-chain service being the independent inter-chain service.

In an embodiment, the target block stores identifiers of multiple service parties participating in the inter-chain service, and the upload information further indicates identifiers of multiple co-exclusive parties of the next block to be uploaded onto the blockchain. The processing unit 502 is further configured to: check whether the identifiers of the multiple service parties in the target block are consistent with the identifiers of the co-exclusive parties of the next block to be uploaded onto the blockchain; and determine that the target block passes the check, in response to the identifiers of the multiple service parties in the target block being consistent with the identifiers of the multiple co-exclusive parties of the next block to be uploaded onto the blockchain.

In an embodiment, the target block stores to-be-deposited service data of each of the multiple service parties, and the upload information further indicates a data amount claimed by each of the multiple co-exclusive parties. The processing unit 502 is further configured to: obtain an amount of the to-be-deposited service data of each of the multiple service parties in the target block; check whether the amount of the to-be-deposited service data of each of the multiple service parties matches the data amount claimed by a corresponding one among the multiple co-exclusive parties which is identical to said service party in the identifier; and determine that the target block passes the check, in response to that the amount of the to-be-deposited service data of each of the multiple service parties matches the data amount claimed by the corresponding one among the multiple co-exclusive parties.

In an embodiment, multiple service parties participate in the inter-chain service, and each of the multiple service parties is one of the at least two consensus clusters. The target block further stores to-be-deposited service data of each of the multiple service parties. Each of the multiple service parties maintains a sub-blockchain. The processing unit 502 is further configured to: check whether the to-be-deposited service data of each of the multiple service party in the target block has been stored in the sub-blockchain of said service party; and determine that the target block passes the check, in response to the to-be-deposited service data of each of the multiple service parties in the target block having been stored in the sub-blockchain of said service party.

In an embodiment, the obtaining unit 501 is further configured to: obtain a bidding result of the next block to be uploaded onto the blockchain, where the bidding result indicates a second representative node, which obtains a privilege of proposing the next block to be uploaded onto the blockchain, and the bidding information, which is submitted by the second representative node for the next block to be uploaded onto the blockchain; and generate the upload information of the next block to be uploaded onto the blockchain according to the bidding result.

In an embodiment, the obtaining unit 501 is further configured to: receive the bidding information submitted by the second representative node for the next to-be-uploaded block, when a block currently located at a tail position of the blockchain is being verified through the consensus mechanism, where the bidding information is configured for requesting the privilege of proposing the next block to be uploaded onto the blockchain; perform a check on the bidding information to reach a consensus among the consensus committee; and receive the bidding result which is broadcasted by the consensus committee.

In an embodiment, the first representative node and the second representative node are identical. The obtaining unit 501 is further configured to: submit the bidding information to the consensus committee, when a block currently located at a tail position of the blockchain is being verified through the consensus mechanism, where the bidding information is configured for requesting the privilege of proposing the next block to be uploaded onto the blockchain; perform a check on the bidding information to reach a consensus among the consensus committee; and receive the bidding result which is broadcasted by the consensus committee.

In an embodiment, the obtaining unit 501 is further configured to extract the bidding information from the bidding result, and generate the upload information of the next block to be uploaded onto the blockchain according to the extracted bidding information.

In an embodiment, the bidding information comprises at least one of: an amount of service data to be packed in the next block to be uploaded onto the blockchain, identifiers of service parties related to the service data, or a type of the service data.

In an embodiment, the bidding information comprises a waiting period and a quantity of resources for bidding, and the consensus committee generates the bidding result in response to the bidding information verified by the consensus committee in the consensus based on the waiting period and the quantity of resources for bidding.

In an embodiment, the resources for bidding comprises at least one of: real resources, virtual objects, or an amount of to-be-deposited service data.

In an embodiment, multiple service parties participate in the inter-chain service, and the first representative node and the second representative node are identical. The processing unit 502 is further configured to: obtain the data of the inter-chain service, of each of the multiple service parties, from a resource pool of the blockchain network; and generate the target block according to the data of the inter-chain service of each of the multiple service parties.

Herein some of the steps involved in the method as shown in Figures 2 and 3 may be performed by the units in the apparatus as shown in Figure 5. For example, steps S201 and S202 as shown in Figure 2 may be performed by the obtaining unit 501 as shown in Figure 5, and step S203 may be performed by the processing unit 502 a shown in Figure 5. For example, steps S301 and S303 as shown in Figure 3 may be performed by the obtaining unit 501 as shown in Figure 5, and steps S302, S304, and S305 may be performed by the processing unit 502 as shown in Figure 5. The units in the apparatus as shown in Figure 5 may be separately or integrally combined into one or more other units, or one or more of the units may be divided into multiple smaller units in functions, which can achieve the same operations without affecting technical effects of embodiments of the present disclosure. The foregoing units are divided based on logical functions. In practice, the functions of one unit may be alternatively implemented by multiple units, or the functions of multiple units may be alternatively implemented by one unit. In other embodiments, the apparatus for processing data based on the blockchain may comprise other units. In practice, these functions may be implemented with assistance of other units, and may be implemented by multiple units in collaboration.

In an embodiment, a computer program (comprising program codes) capable of performing the steps involved in the methods as shown in Figures 2 and 3 may be run on a general-purpose computing apparatus, e.g., a computer comprising a processing element and a memory element, for example, comprising a central processing unit (CPU), a random-access memory (RAM), and a read-only memory (ROM), so as to construct the apparatus as shown in Figure 5 and implement the method disclosed herein. The computer program may be stored on, for example, a computer-readable recording medium, loaded into such computing apparatus via the computer-readable recording medium, and executed on the computing apparatus.

Herein the bidding for the exclusive block can enable the service data of a single consensus cluster (a corresponding institution) to be uploaded onto the block chain in a batch, and the exclusive block allows the single representative node to store its related service data into a single block to facilitate subsequent check and audit. Exclusive blocks are capable to achieve good isolation between service data of different representative nodes and achieve good protection on privacy. When searching for a piece of service data, unrelated blocks may be quickly skipped through the sub-blockchain maintained by each consensus cluster, which improves query efficiency. In addition, the bidding can meet a requirement of a representative node which needs to upload a large amount of service data as soon as possible, and a required quantity of resources for bidding can be calculated through considering the waiting period. Hence, overall efficiency and fairness of the blockchain network are both guaranteed. When considering the data processing solutions corresponding to the inter-chain service, not only a feasible scheme for interactions among multiple service parties is provided, but also independence of data of each inter-chain service data is guaranteed through co-exclusive blocks according to embodiments of the present disclosure. The sub-blockchain maintained by each consensus cluster can effectively synchronize its relevant inter-chain data. In practice, it has been proven that the foregoing solutions have good scalability and are suitable for scenarios in which there are multiple consensus clusters in a blockchain network and various inter-chain services are continuously added into the blockchain network.

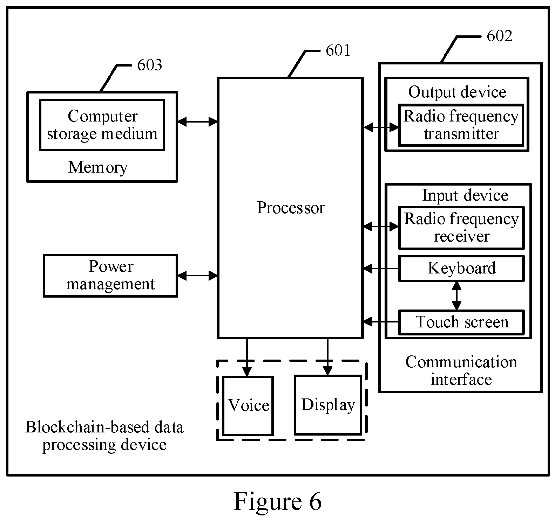

Reference is made to Figure 6, which shows a structural diagram of a device for processing data based on a blockchain according to an embodiment of the present disclosure. As shown in Figure 6, the device for processing data based on a blockchain comprises at least a processor 601, a communication interface 602, and a memory 603. The processor 601, the communication interface 602 and the memory 603 may be connected via a bus or other means. The processor 601 (or a central processing unit, CPU) is a core of computing and control in a terminal, and may parse various instructions in the terminal and process various data of the terminal. For example, the CPU may be configured to parse a switching on/off instruction sent by a user to the terminal and switch the terminal between on and off. For example, the CPU may transmit various types of interactive data among internal components of the terminal. The communication interface 602 may include a standard wired interface, a wireless interface (e.g., Wi-Fi, a mobile communication interface, and the like), and may be configured to receive and transmit data under control of the processor 601. The communication interface 602 may be used for transmission and interaction of data within the terminal. The memory 603 is a memory device in the terminal and is configured to store programs and data. Herein the memory 603 may include an internal memory of the terminal, or an extended memory supported by the terminal. The memory 603 provides a memory space for storing an operating system of the terminal, and the operating system may include, but is not limited to, an Android system, an iOS system, a Windows Phone system, or the like, which is not limited herein.

A computer-readable storage medium (a memory) is further provided according to an embodiment of the present disclosure. The memory is a memory device in a terminal and is configure to store computer-readable instructions and data. The computer-readable storage medium herein may include an internal storage medium in the terminal, or an extended storage medium supported by the terminal. The computer-readable storage medium provides a storage space for storing a processing system of the terminal. In addition, one or more computer-readable instructions which can be loaded and executed by the processor 601 are also stored in the storage space, and the computer-readable instructions may be one or more computer programs (comprising a program code). The computer-readable storage medium herein may be a high-speed RAM or a non-volatile memory, e.g., at least one disk memory. In an embodiment, the computer-readable storage medium may be at least one computer-readable storage medium remote from the processor.

In an embodiment, the computer-readable storage medium stores one or more computer readable instructions. The processor 601 loads and executes the one or more computer-readable instructions stored in the computer-readable storage medium to implement the steps in the foregoing method embodiment(s).

A non-volatile computer-readable storage medium storing computer-readable instructions is further provided according to an embodiment of the present disclosure. The one or more computer-readable instructions are stored in the computer-readable storage medium, and can loaded by a processor to implement the steps in the foregoing method embodiment(s).

A computer program product is further provided according to an embodiment of the present disclosure. The computer program product comprises instructions, and the instructions when executed on a computer cause the computer to execute the steps in the foregoing method embodiment(s).

A computer program product or a computer program is further provided according to an embodiment of the present disclosure. The computer program product or the computer program comprises computer-readable instructions stored in a computer-readable storage medium. A processor of a computer device reads the computer-readable instructions from the computer-readable storage medium, and executes the computer-readable instructions to enable the computer device to execute the steps in the foregoing method embodiment(s).

The steps in the foregoing method embodiment(s) may be adjusted in sequence, combined, or deleted according to an actual requirement. The modules in the apparatus provided herein may be combined, divided, or and deleted according to an actual requirement. Those skilled in the art may understand that all or part of the steps in various methods according to the foregoing embodiments may be completed by instructing related hardware through a program, and the program may be stored in a computer-readable storage medium including a flash drive, a read-only memory (ROM), a random access memory (RAM), a magnetic disk, an optical disk, and the like.

Hereinabove discloses are only preferable embodiments of the present disclosure. It is appreciated that these embodiments should not be construed as limitations on the scope of the present disclosure. Those skilled in the art may understand all or part of a process for implementing the foregoing embodiments, and equivalent changes made in accordance with the claims of the present disclosure, still fall within the scope of the present disclosure.

The scope of protection is defined by the claims.

**Claims**

1. A method for processing data based on a blockchain, wherein:

   the blockchain comprises at least one block and is deployed in a blockchain network comprising a witness subnet and a consensus subnet, the witness subnet comprises at least one service node, and the consensus subnet comprises at least two consensus clusters;
   each of the at least two consensus cluster comprises a plurality of accounting nodes, one of which is elected as a representative node of such consensus cluster, and the representative nodes of all consensus clusters form a consensus committee of the blockchain;
   the method is executable by a computer device at a first representative node among the representative nodes, and comprises:

      obtaining (S201) upload information of the blockchain, wherein the upload information indicates a block type to which a next block to be uploaded onto the blockchain is required to belong;
      obtaining (S202) a target block to be verified through a consensus mechanism in the blockchain network, wherein the target block is generated from data of an inter-chain service; and
      determining (S203) the target block to serve as the next block to be uploaded onto the blockchain and adding the target block into the blockchain, in response to the upload information indicating that the block type is a co-exclusive type, wherein each block of the co-exclusive type stores data of a respective independent inter-chain service.

2. The method according to claim 1, wherein determining the target block to serve as the next block to be uploaded onto the blockchain and adding the target block into the blockchain, in response to the upload information indicating that the block type is a co-exclusive type, comprises:

      performing a check on the target block according to a rule for the co-exclusive type, in response to the upload information indicating that the next block to be uploaded onto the blockchain is of the co-exclusive type; and
      determining that the target block serves as the next block to be uploaded onto the blockchain and adding the target block into the blockchain, in response to the target block passing the check.

3. The method according to claim 2, wherein the target block stores the data of the inter-chain service, and performing the check on the target block according to the rule for the co-exclusive type comprises:

      checking whether the inter-chain service is an independent inter-chain service; and
      determining that the target block passes the check, in response to that the inter-chain service being the independent inter-chain service.

4. The method according to claim 2, wherein:

      the target block stores identifiers of a plurality of service parties participating in the inter-chain service, and the upload information further indicates identifiers of a plurality of co-exclusive parties of the next block to be uploaded onto the blockchain; and
      performing the check on the target block according to the rule for the co-exclusive type comprises:

checking whether the identifiers of the plurality of service parties in the target block are consistent with the identifiers of the co-exclusive parties of the next block to be uploaded onto the blockchain; and determining that the target block passes the check, in response to the identifiers of the plurality of service parties in the target block being consistent with the identifiers of the plurality of co-exclusive parties of the next block to be uploaded onto the blockchain.

5. The method according to claim 4, wherein:

the target block stores to-be-deposited service data of each of the service parties, and the upload information further indicates a data amount claimed by each of the co-exclusive parties; and determining that the target block passes the check comprises: in response to the identifiers of the plurality of service parties in the target block being consistent with the identifiers of the plurality of co-exclusive parties of the next block to be uploaded onto the blockchain,

obtaining an amount of the to-be-deposited service data of each of the service parties in the target block; checking whether the amount of the to-be-deposited service data of each of the service parties matches the data amount claimed by a one among the plurality of co-exclusive parties which is identical to said service party in the identifier; and determining that the target block passes the check, in response to that the amount of the to-be-deposited service data of each of the service parties matches the data amount claimed by the one among the plurality of co-exclusive parties.

6. The method according to claim 2, wherein:

a plurality of service parties participate in the inter-chain service, each of the service parties is one of the at least two consensus clusters, the target block further stores to-be-deposited service data of each of the service parties, and each of the service parties maintains a sub-blockchain; performing the check on the target block according to the rule for the co-exclusive type comprises:

checking whether the to-be-deposited service data of each of the service party in the target block has been stored in the sub-blockchain of said service party; and determining that the target block passes the check, in response to the to-be-deposited service data of each of the service parties in the target block having been stored in the sub-blockchain of said service party.

7. The method according to claim 1, wherein obtaining upload information of the blockchain comprises:

obtaining a bidding result of the next block to be uploaded onto the blockchain, wherein the bidding result indicates:

a second representative node, which obtains a privilege of proposing the next block to be uploaded onto the blockchain, and the bidding information, which is submitted by the second representative node for the next block to be uploaded onto the blockchain; and

generating the upload information of the next block to be uploaded onto the blockchain according to the bidding result.

8. The method according to claim 7, wherein obtaining the bidding result of the next block to be uploaded onto the blockchain comprises:

receiving the bidding information submitted by the second representative node for the next to-be-uploaded block, when a block currently located at a tail position of the blockchain is being verified through the consensus mechanism, wherein the bidding information is configured for requesting the privilege of proposing the next block to be uploaded onto the blockchain; performing a check on the bidding information to reach a consensus among the consensus committee; and receiving the bidding result which is broadcasted by the consensus committee.

9. The method according to claim 7, wherein the first representative node and the second representative node are identical, and obtaining the bidding result of the next block to be uploaded onto the blockchain comprises:

> submitting the bidding information to the consensus committee, when a block currently located at a tail position of the blockchain is being verified through the consensus mechanism, wherein the bidding information is configured for requesting the privilege of proposing the next block to be uploaded onto the blockchain;
> performing a check on the bidding information to reach a consensus among the consensus committee; and
> receiving the bidding result which is broadcasted by the consensus committee.

10. The method according to claim 7, wherein generating the upload information of the next block to be uploaded onto the blockchain according to the bidding result comprises:

> extracting the bidding information from the bidding result; and
> generating the upload information of the next block to be uploaded onto the blockchain according to the extracted bidding information.

11. The method according to any one of claims 7 to 10, wherein:

> the bidding information comprises a waiting period and a quantity of resources for bidding, and
> the consensus committee generates the bidding result in response to the bidding information verified by the consensus committee in the consensus based on the waiting period and the quantity of resources for bidding.

12. The method according to claim 11, wherein the waiting period is negatively correlated with a quantity of resources required for bidding, and the bidding information is obtained at least though calculating a weighted sum of the waiting period and the quantity of resources for bidding.

13. The method according to claim 12, wherein the bidding information is obtained by though calculating a weighted sum of the waiting period, the quantity of resources for bidding, and a weight representing a priority in a service.

14. The method according to claim 7, wherein a plurality of service parties participate in the inter-chain service, the first representative node and the second representative node are identical, and the method further comprises:

> obtaining the data of the inter-chain service, of each of the service parties, from a resource pool of the blockchain network; and
> generating the target block according to the data of the inter-chain service of each of the service parties.

15. A device for processing data based on a blockchain, comprising:

> one or more processors, configured to execute computer-readable instructions; and
> a computer-readable storage medium, storing the computer-readable instructions;
> wherein the computer-readable instructions when executed by the processor implement the method according to any one of claims 1 to 14.

**Patentansprüche**

1. Verfahren zum Verarbeiten von Daten basierend auf einer Blockchain, wobei:

> die Blockchain mindestens einen Block umfasst und in einem Blockchain-Netzwerk installiert ist, das ein Zeugen-Teilnetzwerk und ein Konsens-Teilnetzwerk umfasst, das Zeugen-Teilnetzwerk mindestens einen Dienstknoten umfasst, und das Konsens-Teilnetzwerk mindestens zwei Konsens-Cluster umfasst;
> jeder der mindestens zwei Konsens-Cluster eine Vielzahl von Abrechnungsknoten umfasst, von denen einer als repräsentativer Knoten eines solchen Konsens-Clusters ausgewählt wird, und die repräsentativen Knoten aller Konsens-Cluster einen Konsensausschuss der Blockchain bilden;
> das Verfahren durch eine Computervorrichtung an einem ersten repräsentativen Knoten unter den repräsentativen Knoten ausführbar ist und umfasst:
>
>> Erzielen (S201) von Upload-Informationen der Blockchain, wobei die Upload-Informationen einen Blocktyp angeben, zu dem ein nächster Block, der in die Blockchain hochgeladen werden soll, gehören muss;

Erzielen (S202) eines Zielblocks, der über einen Konsensmechanismus in dem Blockchain-Netzwerk verifiziert werden soll, wobei der Zielblock aus den Daten eines kettenübergreifenden Dienstes generiert wird; und

Bestimmen (S203), dass der Zielblock, der als der nächste Block dienen soll, in die Blockchain hochgeladen wird, und Hinzufügen des Zielblocks zu der Blockchain als Reaktion darauf, dass die Upload-Informationen angeben, dass der Blocktyp ein co-exklusiver Typ ist, wobei jeder Block des co-exklusiven Typs Daten eines jeweiligen unabhängigen kettenübergreifenden Dienstes speichert.

2. Verfahren nach Anspruch 1, wobei das Bestimmen, dass der Zielblock, der als der nächste Block dienen soll, in die Blockchain hochgeladen wird, und das Hinzufügen des Zielblocks zu der Blockchain als Reaktion darauf, dass die Upload-Informationen angeben, dass der Blocktyp ein co-exklusiver Typ ist, umfassen:

Ausführen einer Kontrolle an dem Zielblock gemäß einer Regel für den co-exklusiven Typ, als Reaktion darauf, dass die Upload-Informationen angeben, dass der nächste Block, der in die Blockchain hochzuladen ist, der co-exklusive Typ ist; und

Bestimmen, dass der Zielblock als der nächste Block dient, der in die Blockchain hochzuladen ist, und Hinzufügen des Zielblocks zu der Blockchain als Reaktion darauf, dass der Zielblock die Kontrolle besteht.

3. Verfahren nach Anspruch 2, wobei der Zielblock die Daten des kettenübergreifenden Dienstes speichert, und das Ausführen der Kontrolle an dem Zielblock gemäß der Regel für den co-exklusiven Typ umfasst:

Kontrollieren, ob der kettenübergreifende Dienst ein unabhängiger kettenübergreifender Dienst ist; und

Bestimmen, dass der Zielblock die Kontrolle besteht, als Reaktion darauf, dass der kettenübergreifende Dienst der unabhängige kettenübergreifende Dienst ist.

4. Verfahren nach Anspruch 2, wobei:

der Zielblock Kennungen einer Vielzahl von Dienstbeteiligten speichert, die an dem kettenübergreifenden Dienst teilnehmen, und die Upload-Informationen ferner Kennungen einer Vielzahl von co-exklusiven Beteiligten des nächsten Blocks, der in der Blockchain hochzuladen ist, angeben; und

das Ausführen der Kontrolle an dem Zielblock gemäß der Regel für den co-exklusiven Typ umfasst:

Kontrollieren, ob die Kennungen der Vielzahl von Dienstbeteiligten in dem Zielblock mit den Kennungen der co-exklusiven Beteiligten des nächsten Blocks, der in die Blockchain hochzuladen ist, übereinstimmen; und

Bestimmen, dass der Zielblock die Kontrolle besteht, als Reaktion darauf, dass die Kennungen der Vielzahl von Dienstbeteiligten in dem Zielblock mit den Kennungen der Vielzahl von co-exklusiven Beteiligten des nächsten Blocks, der in die Blockchain hochzuladen ist, übereinstimmen.

5. Verfahren nach Anspruch 4, wobei:

der Zielblock zu hinterlegende Dienstdaten eines jeden der Dienstbeteiligten speichert, und die Upload-Informationen ferner eine Datenmenge angeben, die von jedem der co-exklusiven Beteiligten beansprucht wird; und

das Bestimmen, dass der Zielblock die Kontrolle besteht, umfasst: als Reaktion darauf, dass die Kennungen der Vielzahl von Dienstbeteiligten in dem Zielblock mit den Kennungen der Vielzahl von co-exklusiven Beteiligten des nächsten Blocks, der in die Blockchain hochzuladen ist, übereinstimmen,

Erzielen einer Menge der zu hinterlegenden Dienstdaten eines jeden der Dienstbeteiligten in dem Zielblock;

Kontrollieren, ob die Menge der zu hinterlegenden Dienstdaten eines jeden der Dienstbeteiligten mit der Datenmenge, die von einem aus der Vielzahl von co-exklusiven Beteiligten beansprucht wird, der mit dem Dienstbeteiligten in der Kennung identisch ist, übereinstimmt; und

Bestimmen, dass der Zielblock die Kontrolle besteht, als Reaktion darauf, dass die Menge der zu hinterlegenden Dienstdaten eines jeden der Dienstbeteiligten mit der Datenmenge übereinstimmt, die von dem einen der Vielzahl von co-exklusiven Beteiligten beansprucht wird.

6. Verfahren nach Anspruch 2, wobei:

eine Vielzahl von Dienstbeteiligten an dem kettenübergreifenden Dienst teilnimmt, wobei jeder der Dienstbeteiligten eines der mindestens zwei Konsens-Cluster ist, der Zielblock ferner zu hinterlegende Dienstdaten eines jeden der Dienstbeteiligten speichert, und jeder der Dienstbeteiligten eine Teil-Blockchain pflegt;
das Ausführen der Kontrolle an dem Zielblock gemäß der Regel für den co-exklusiven Typ umfasst:

Kontrollieren, ob die zu hinterlegenden Dienstdaten eines jeden der Dienstbeteiligten in dem Zielblock in der Teil-Blockchain des Dienstbeteiligten gespeichert wurden; und
Bestimmen, dass der Zielblock die Kontrolle besteht, als Reaktion darauf, dass die zu hinterlegenden Dienstdaten eines jeden der Dienstbeteiligten in dem Zielblock in der Teil-Blockchain des Dienstbeteiligten gespeichert wurden.

7. Verfahren nach Anspruch 1, wobei das Erzielen von Upload-Informationen der Blockchain umfasst:

Erzielen eines Bieterergebnisses des nächsten Blocks, der in die Blockchain hochzuladen ist, wobei das Bieterergebnis angibt:

einen zweiten repräsentativen Knoten, der ein Privileg des Vorschlagen des nächsten Blocks, der in die Blockchain hochzuladen ist, erzielt, und
die Bieterinformationen, die von dem zweiten repräsentativen Knoten für den nächsten Block, der in die Blockchain hochzuladen ist, eingereicht werden; und

Generieren der Upload-Informationen des nächsten Blocks, der in die Blockchain hochzuladen ist, gemäß dem Bieterergebnis.

8. Verfahren nach Anspruch 7, wobei das Erzielen des Bieterergebnisses des nächsten Blocks, der in die Blockchain hochzuladen ist, umfasst:

Empfangen der Bieterinformationen, die von dem zweiten repräsentativen Knoten für den nächsten hochzuladenden Block eingereicht werden, wenn ein Block, der sich gerade in einer Schlussposition der Blockchain befindet, über den Konsensmechanismus kontrolliert wird, wobei die Bieterinformationen dazu konfiguriert sind, das Privileg des Vorschlagens des nächsten Blocks, der in die Blockchain hochzuladen ist, anzufragen;
Ausführen einer Kontrolle an den Bieterinformationen, um einen Konsens in dem Konsensausschuss zu erreichen; und
Empfangen des Bieterergebnisses, das von dem Konsensausschuss rundgesendet wird.

9. Verfahren nach Anspruch 7, wobei der erste repräsentative Knoten und der zweite repräsentative Knoten identisch sind, und das Erzielen des Bieterergebnisses des nächsten Blocks, der in die Blockchain hochzuladen ist, umfasst:

Einreichen der Bieterinformationen bei dem Konsensausschuss, wenn ein Block, der sich gerade in einer Schlussposition der Blockchain befindet, über den Konsensmechanismus verifiziert wird, wobei die Bieterinformationen dazu konfiguriert sind, das Privileg des Vorschlagens des nächsten Blocks, der in die Blockchain hochzuladen ist, anzufragen;
Ausführen einer Kontrolle an den Bieterinformationen, um einen Konsens in dem Konsensausschuss zu erreichen; und
Empfangen des Bieterergebnisses, das von dem Konsensausschuss rundgesendet wird.

10. Verfahren nach Anspruch 7, wobei das Generieren der Upload-Informationen des nächsten Blocks, der in die Blockchain hochzuladen ist, gemäß dem Bieterergebnis umfasst:

Extrahieren der Bieterinformationen aus dem Bieterergebnis; und
Generieren der Upload-Informationen des nächsten Blocks, der in die Blockchain hochzuladen ist, gemäß den extrahierten Bieterinformationen.

11. Verfahren nach einem der Ansprüche 7 bis 10, wobei:

die Bieterinformationen eine Warteperiode und eine Menge von Ressourcen zum Bieten umfassen, und
der Konsensausschuss das Bieterergebnis als Reaktion darauf, dass die Bieterinformationen, die von dem Konsensausschuss verifiziert werden, in dem Konsens basierend auf der Warteperiode und der Menge von Ressourcen zum Bieten generiert.

**12.** Verfahren nach Anspruch 11, wobei die Warteperiode mit einer Menge von Ressourcen, die zum Bieten benötigt werden, negativ korreliert, und die Bieterinformationen mindestens durch Berechnen einer gewichteten Summe der Warteperiode und der Menge von Ressourcen zum Bieten erzielt werden.

**13.** Verfahren nach Anspruch 12, wobei die Bieterinformationen durch Berechnen einer gewichteten Summe der Warteperiode, der Menge von Ressourcen zum Bieten und einer Gewichtung, die eine Priorität in einem Dienst darstellt, erzielt werden.

**14.** Verfahren nach Anspruch 7, wobei eine Vielzahl von Dienstbeteiligten an dem kettenübergreifenden Dienst teilnimmt, der erste repräsentative Knoten und der zweite repräsentative Knoten identisch sind, und das Verfahren ferner umfasst:

Erzielen der Daten des kettenübergreifenden Dienstes eines jeden der Dienstbeteiligten aus einer Ressourcenreserve des Blockchain-Netzwerks; und
Generieren des Zielblocks gemäß den Daten des kettenübergreifenden Dienstes eines jeden der Dienstbeteiligten.

**15.** Vorrichtung zum Verarbeiten von Daten basierend auf einer Blockchain, umfassend:

einen oder mehrere Prozessoren, die dazu konfiguriert sind, computerlesbare Anweisungen auszuführen; und
ein computerlesbares Speichermedium, das die computerlesbaren Anweisungen speichert;
wobei die computerlesbaren Anweisungen, wenn sie von dem Prozessor ausgeführt werden, das Verfahren nach einem der Ansprüche 1 bis 14 umsetzen.

## Revendications

**1.** Procédé de traitement de données sur la base d'une chaîne de blocs, dans lequel :

la chaîne de blocs comprend au moins un bloc et est déployée dans un réseau de chaînes de blocs comprenant un sous-réseau témoin et un sous-réseau de consensus, le sous-réseau témoin comprend au moins un nœud de service, et le sous-réseau de consensus comprend au moins deux grappes de consensus ;
chacune des au moins deux grappes de consensus comprend une pluralité de nœuds comptables dont l'un est élu en tant que nœud représentatif de cette grappe de consensus, et les nœuds représentatifs de toutes les grappes de consensus forment un comité de consensus de la chaîne de blocs ;
le procédé est exécutable par un dispositif informatique au niveau d'un premier nœud représentatif parmi les nœuds représentatifs, et comprend les étapes suivantes :

obtenir (S201) des informations de téléchargement de la chaîne de blocs, dans lequel les informations de téléchargement indiquent un type de bloc auquel un bloc suivant à télécharger sur la chaîne de blocs doit appartenir ;
obtenir (S202) un bloc cible à vérifier par un mécanisme de consensus dans le réseau de chaînes de blocs, dans lequel le bloc cible est généré à partir de données d'un service inter-chaînes ; et
déterminer (S203) le bloc cible devant servir de bloc suivant à télécharger sur la chaîne de blocs, et ajouter le bloc cible dans la chaîne de blocs, en réponse à l'indication par les informations de téléchargement que le type de bloc est un type co-exclusif, dans lequel chaque bloc du type co-exclusif stocke des données d'un service inter-chaînes indépendant respectif.

**2.** Procédé selon la revendication 1, dans lequel la détermination du bloc cible devant servir de bloc suivant à télécharger sur la chaîne de blocs et l'ajout du bloc cible dans la chaîne de blocs en réponse à l'indication par les informations de téléchargement que le type de bloc est un type co-exclusif, comprennent ce qui suit :

effectuer un contrôle sur le bloc cible selon une règle pour le type co-exclusif en réponse à l'indication par les informations de téléchargement que le bloc suivant à télécharger sur la chaîne de blocs est du type co-exclusif ; et
déterminer que le bloc cible sert de bloc suivant à télécharger sur la chaîne de blocs, et ajouter le bloc cible dans la chaîne de blocs en réponse à la réussite du contrôle par le bloc cible.

**3.** Procédé selon la revendication 2, dans lequel le bloc cible stocke les données du service inter-chaînes, et la réalisation du contrôle sur le bloc cible selon la règle pour le type co-exclusif comprend ce qui suit :

effectuer un contrôle pour savoir si le service inter-chaînes est un service inter-chaînes indépendant ; et déterminer la réussite du contrôle par le bloc cible en réponse au fait que le service inter-chaînes est le service inter-chaînes indépendant.

4. Procédé selon la revendication 2, dans lequel :

le bloc cible stocke des identifiants d'une pluralité de parties de service participant au service inter-chaînes, et les informations de téléchargement indiquent en outre des identifiants d'une pluralité de parties co-exclusives du bloc suivant à télécharger sur la chaîne de blocs ; et la réalisation du contrôle sur le bloc cible selon la règle pour le type co-exclusif comprend ce qui suit :

effectuer un contrôle pour savoir si les identifiants de la pluralité de parties de service dans le bloc cible sont cohérents avec les identifiants des parties co-exclusives du bloc suivant à télécharger sur la chaîne de blocs ; et déterminer la réussite du contrôle par le bloc cible en réponse au fait que les identifiants de la pluralité de parties de service dans le bloc cible sont cohérents avec les identifiants de la pluralité de parties co-exclusives du bloc suivant à télécharger sur la chaîne de blocs.

5. Procédé selon la revendication 4, dans lequel :

le bloc cible stocke des données de service à déposer de chacune des parties de service, et les informations de téléchargement indiquent en outre une quantité de données revendiquées par chacune des parties co-exclusives ; et la détermination de la réussite du contrôle par le bloc cible comprend ce qui suit : en réponse au fait que les identifiants de la pluralité de parties de service dans le bloc cible sont cohérents avec les identifiants de la pluralité de parties co-exclusives du bloc suivant à télécharger sur la chaîne de blocs, obtenir une quantité de données de service à déposer de chacune des parties de service dans le bloc cible ; effectuer un contrôle pour savoir si la quantité de données de service à déposer de chacune des parties de service concorde avec la quantité de données revendiquées par une partie parmi la pluralité de parties co-exclusives qui est identique à ladite partie de service dans l'identifiant ; et déterminer la réussite du contrôle par le bloc cible en réponse au fait que la quantité de données de service à déposer de chacune des parties de service concorde avec la quantité de données revendiquées par cette partie parmi la pluralité de parties co-exclusives.

6. Procédé selon la revendication 2, dans lequel :

une pluralité de parties de service participent au service inter-chaînes, chacune des parties de service est l'une des au moins deux grappes de consensus, le bloc cible stocke en outre des données de service à déposer de chacune des parties de service, et chacune des parties de service maintient une sous-chaîne de blocs ; la réalisation du contrôle sur le bloc cible selon la règle pour le type co-exclusif comprend ce qui suit :

effectuer un contrôle pour savoir si les données de service à déposer de chacune des parties de service dans le bloc cible ont été stockées dans la sous-chaîne de blocs de ladite partie de service ; et déterminer la réussite du contrôle par le bloc cible en réponse au fait que les données de service à déposer de chacune des parties de service dans le bloc cible ont été stockées dans la sous-chaîne de blocs de ladite partie de service.

7. Procédé selon la revendication 1, dans lequel l'obtention d'informations de téléchargement de la chaîne de blocs comprend ce qui suit :

obtenir un résultat de soumission en ligne du bloc suivant à télécharger sur la chaîne de blocs, dans lequel le résultat de soumission en ligne indique :

un deuxième nœud représentatif qui obtient un privilège de proposer le bloc suivant à télécharger sur la chaîne de blocs, et les informations de soumission en ligne, qui sont soumises par le deuxième nœud représentatif pour le bloc suivant à télécharger sur la chaîne de blocs ; et

générer les informations de téléchargement du bloc suivant à télécharger sur la chaîne de blocs selon le résultat de soumission en ligne.

8. Procédé selon la revendication 7, dans lequel l'obtention du résultat de soumission en ligne du bloc suivant à télécharger sur la chaîne de blocs comprend ce qui suit :

recevoir les informations de soumission en ligne soumises par le deuxième nœud représentatif pour le bloc suivant à télécharger lorsqu'un bloc actuellement situé en queue de la chaîne de blocs est en cours de vérification par le mécanisme de consensus, dans lequel les informations de soumission en ligne sont configurées pour demander le privilège de proposer le bloc suivant à télécharger sur la chaîne de blocs ;
effectuer un contrôle sur les informations de soumission en ligne pour parvenir à un consensus au sein du comité de consensus ; et
recevoir le résultat de soumission en ligne qui est diffusé par le comité de consensus.

9. Procédé selon la revendication 7, dans lequel le premier nœud représentatif et le deuxième nœud représentatif sont identiques, et l'obtention du résultat de soumission en ligne du bloc suivant à télécharger sur la chaîne de blocs comprend ce qui suit :

soumettre les informations de soumission en ligne au comité de consensus lorsqu'un bloc actuellement situé en queue de la chaîne de blocs est en cours de vérification par le mécanisme de consensus, dans lequel les informations de soumission en ligne sont configurées pour demander le privilège de proposer le bloc suivant à télécharger sur la chaîne de blocs ;
effectuer un contrôle sur les informations de soumission en ligne pour parvenir à un consensus au sein du comité de consensus ; et
recevoir le résultat de soumission en ligne qui est diffusé par le comité de consensus.

10. Procédé selon la revendication 7, dans lequel la génération des informations de téléchargement du bloc suivant à télécharger sur la chaîne de blocs selon le résultat de soumission en ligne comprend ce qui suit :

extraire les informations de soumission en ligne à partir du résultat de soumission en ligne ; et
générer les informations de téléchargement du bloc suivant à télécharger sur la chaîne de blocs selon les informations de soumission en ligne extraites.

11. Procédé selon l'une des revendications 7 à 10, dans lequel :

les informations de soumission en ligne comprennent une période d'attente et une quantité de ressources pour une soumission en ligne, et
le comité de consensus génère le résultat de soumission en ligne en réponse aux informations de soumission en ligne vérifiées par le comité de consensus dans le consensus sur la base de la période d'attente et de la quantité de ressources pour une soumission en ligne.

12. Procédé selon la revendication 11, dans lequel la période d'attente est corrélée négativement avec une quantité de ressources requises pour une soumission en ligne, et les informations de soumission en ligne sont obtenues au moins en calculant une somme pondérée de la période d'attente et de la quantité de ressources pour une soumission en ligne.

13. Procédé selon la revendication 12, dans lequel les informations de soumission en ligne sont obtenues en calculant une somme pondérée de la période d'attente, de la quantité de ressources pour une soumission en ligne et d'un poids représentant une priorité dans un service.

14. Procédé selon la revendication 7, dans lequel une pluralité de parties de service participent au service inter-chaînes, le premier nœud représentatif et le deuxième nœud représentatif sont identiques, et le procédé comprend en outre les étapes suivantes :

obtenir les données du service inter-chaînes de chacune des parties de service à partir d'un groupe de ressources du réseau de chaînes de blocs ; et

générer le bloc cible selon les données du service inter-chaînes de chacune des parties de service.

15. Dispositif de traitement de données sur la base d'un chaîne de blocs, comprenant :

un ou plusieurs processeurs configurés pour exécuter des instructions lisibles par ordinateur ; et
un support de stockage lisible par ordinateur stockant les instructions lisibles par ordinateur ;
dans lequel les instructions lisibles par ordinateur, lorsqu'elles sont exécutées par le processeur, mettent en œuvre le procédé selon l'une des revendications 1 à 14.

Figure 1a

Figure 1b

1. Monitor global input information by a node

2. Verify the input information, store the input information in a memory pool, and update a Hash tree

3. Update a timestamp

4. Try different random numbers

Process of generating a new block

5. Calculate a feature value

6. Repeat 2 to 5 until find a qualified feature value

7. Pack the block

8. Broadcast the new block

9. Write into a block chain after verification of other nodes

## Figure 1c

Service node

Accounting node

Accounting node

Accounting node

Accounting node

Accounting node

Accounting node

Accounting node

Accounting node

Accounting node

Accounting node

Witness subnet

Consensus subnet

## Figure 1d

Figure 1e

Figure 1f

Obtain upload information of the blockchain, where the upload information indicates a block type to which a next block to be uploaded onto the blockchain is required to belong — S201

Obtain a target block to be verified through a consensus mechanism in the blockchain network, where the target block is generated from data of an inter-chain service — S202

Determine the target block to serves as the next block to be uploaded onto the blockchain and add the target block into the blockchain, in response to the upload information indicating that the block type is a co-exclusive type, where each block of the co-exclusive type stores data of a respective independent inter-chain service — S203

Figure 2

Obtain a bidding result for the next block to be uploaded onto the blockchain, where the bidding result indicates a second representative node, which obtains a privilege of proposing the next block to be uploaded onto the blockchain, and bidding information, which is submitted by the second representative node for the next block to be uploaded onto the blockchain — S301

Generate the upload information of the next block to be uploaded onto the blockchain according to the bidding result — S302

Obtain a target block to be verified through a consensus mechanism in a blockchain network — S303

Perform a check on the target block according to a consensus rule for a co-exclusive type, in response to the upload information indicating that a block type of the next block to be uploaded onto the block chain is the co-exclusive type — S304

Determine the target block to serve as the next block to be uploaded onto the blockchain and add the target block into the blockchain, in a case that the target block passes the check — S305

Figure 3

Figure 4

Figure 5

Figure 6

**REFERENCES CITED IN THE DESCRIPTION**

**Patent documents cited in the description**

- CN 2021109485046

- US 2020034395 A1